# EUROPÄISCHE PATENTSCHRIFT

(11) **EP 2 559 506 B1**
(45) Veröffentlichungstag und Bekanntmachung des Hinweises auf die Patenterteilung: **27.04.2016**
(21) Anmeldenummer: 12180288.8
(22) Anmeldetag: 13.08.2012
(51) Int. Cl.: B23B 31/113, B23G 1/34, B23Q 1/48, B23Q 5/04

(54) **Wirbelvorrichtung**
Whirling unit
Dispositif à tourbillon

(30) Priorität: 15.08.2011 DE 102011110131
(43) Veröffentlichungstag der Anmeldung: 20.02.2013
(73) Patentinhaber: LEISTRITZ PRODUKTIONSTECHNIK GMBH, 90459 Nürnberg (DE)
(72) Erfinder: Dr. Stave, Hinrich, 72622 Nürtingen (DE); Kudryavtsev, Denis, 90766 Fürth (DE)
(74) Vertreter: Blaumeier, Jörg

(56) Entgegenhaltungen:
- DE-A1- 2 142 004
- DE-A1- 2 346 809
- DE-A1- 2 752 393
- DE-A1- 19 858 669
- US-A- 3 486 413
- US-A- 4 958 967

## Beschreibung

Die Erfindung betrifft eine Wirbelvorrichtung, umfassend ein Werkzeug, das an einer um eine Drehachse rotierend und längs einer Linearachse axial verschiebbar bewegbaren Spindel angeordnet ist, wobei die Spindel in einem Werkzeuggehäuse aufgenommen ist und über eine mittels eines Antriebsmittels antreibbaren Welle bewegbar ist.

Metallgegenstände müssen zur Ausbildung von Nuten und Gewindegängen häufig außenseitig oder im Falle von hohlzylindrischen Bauteilen auch innenseitig bearbeitet werden. Ein Beispiel für solche Gegenstände sind Spindeln und Muttern für Kugelgewinde- oder Trapezgewindetriebe. Neben den klassischen Bearbeitungsverfahren durch Drehen oder Fräsen ist es bekannt, derartige Strukturen durch Wirbeln zu erzeugen. Beim Wirbeln werden das Außenwirbeln und das Innenwirbeln unterschieden. Während beim Außenwirbeln das ringförmige Werkzeug mit nach innen gerichteten Schneiden exzentrisch positioniert mit hoher Drehzahl um das sich langsam drehende Werkstück, das auch axial vorgeschoben wird, wenn ein Gewinde zu erzeugen ist, rotiert, greift beim Innenwirbeln das Werkzeug in die Werkstückbohrung ein, so dass das Werkzeug der exzentrisch zur Bohrungsmitte rotierenden Spindel an der Bohrungsinnenwand spanabhebend angreift.

Insbesondere beim Innenwirbeln zeigen sich die Vorteile dieses Herstellungsverfahrens gegenüber dem Drehen bzw. Fräsen. Denn das Werkzeug kann an der Bohrungswand abgestützt werden, da es nicht zur Bohrungsachse geschwenkt und nicht radial verschoben wird. Hierdurch ist es möglich, auch sehr lange Bohrungen zu bearbeiten. Neben hoher Produktivität ist ein weiterer Vorteil der unterbrochene Schnitt, das heißt, dass sich keine langen Bandspäne bilden.

Eine bekannte, dem Innenwirbeln dienende Wirbelvorrichtung weist ein Gehäuse auf, das auf einem Schlitten in der Maschine angeordnet wird. An dem Gehäuse wird das Werkzeuggehäuse manuell befestigt, üblicherweise aufgeschraubt. Dieses Werkzeuggehäuse, das während der Bearbeitung in die Werkstückbohrung eingreift, ist in Länge und Durchmesser spezifisch für das zu bearbeitende Werkstück ausgelegt. Innerhalb des Werkzeuggehäuses befindet sich eine drehbar gelagerte und axial verschiebliche Welle, die an ihrer Spitze die Schneide, also das eigentliche Werkzeug, trägt. Diese Welle ist mit einer im bereits genannten Gehäuse angeordneten zentralen Antriebswelle lösbar verbunden. Die Drehlagerung der die Schneide tragenden Welle oder Spindel erfolgt im Werkzeuggehäuse nahe der Schneide. Die das Gehäuse durchlaufende, dem Antrieb dienende Welle ist am einen Ende in einer verdrehsteifen Kugelbuchse oder Vielkeilbuchse und im Bereich des anderen Endes in einer geeigneten Wälzlageraufnahme drehgelagert.

Diese Welle ist mit einem Antriebsmittel, üblicherweise einem Riementrieb, gekoppelt, dessen Riemen einen drehbaren, aber axial fest gelagerten Ring, in dessen Zentrum sich die verdrehsteife Kugelbuchse oder Vielkeilbuchse befindet, antreibt. Diese Kugelbuchse oder Vielkeilbuchse überträgt die Drehbewegung auf die Welle und bildet sogleich ein Radiallager für diese Welle.

Der für das Innenwirbeln zum Wirbeln eines Gewindes erforderliche Achsantrieb, über den die Werkzeugwelle nebst Schneide axial vorwärts und zurückbewegt wird, wird bei bekannten Wirbelvorrichtungen direkt vom Drehantrieb abgeleitet. Hierzu ist auf der das Gehäuse durchsetzenden Welle ein Lagerbock befestigt, in dem eine Schubstange gelenkig gelagert ist. Diese Schubstange ist an ihrem anderen Ende an einem drehbar gelagerten Hohlring ebenfalls gelenkig gelagert. Die Drehachse des Hohlrings fällt in der Grundstellung mit der Drehachse der Welle zusammen. Rotiert die Welle, so bewirkt die Schubstange, dass auch der Hohlring rotiert. Die axiale Bewegung der Welle ist in der Grundstellung Null. Wird der Hohlring über einen Stellmotor um seine Schwenkachse geschwenkt, so entsteht im Zusammenwirken mit der Schubstange eine sinusförmige Axialbewegung der Welle, damit zwangsläufig auch der Werkzeugspindel. Die Amplitude dieser sinusförmigen Axialbewegung wird mit dem Schwenkwinkel des Hohlrings gesteuert. Die Frequenz der Bewegung hängt von der Drehfrequenz der Welle ab.

Das heißt, dass die zentrale Welle wie auch die mit ihr gekuppelte Werkzeugspindel sowohl eine Rotations- als auch eine Axialbewegung ausführt. Wälzlager, die beide Bewegungen ausführen müssen respektive auch mit einer axialen Bewegungskomponente beaufschlagt werden, unterliegen erhöhtem Verschleiß, was sich nachteilig auf die Genauigkeit und Wartungskosten auswirken kann. Während die Lagerung der zentralen Antriebswelle in der Kugelbuchse bzw. am anderen Ende in einer entsprechenden Lageraufnahme entsprechend ausgelegt werden kann, da hier ausreichend Raum zur Verfügung steht, ist eine Lagerung der Werkzeugspindel im Werkzeuggehäuse nur über Lager möglich, die sowohl die Drehbewegung als auch die Axialverschiebung führen, weshalb sie aufgrund der Doppelbewegung beachtlich beansprucht werden. DE 198 58 669 offenbart eine Wirbelvorrichtung gemäß dem Oberbegriff des Anspruchs 1.

Der Erfindung liegt damit das Problem zugrunde, eine Bearbeitungsvorrichtung anzugeben, die demgegenüber verbessert ist, so dass insbesondere die Beanspruchung der Lagerung der Werkzeugspindel verringert wird.

Zur Lösung dieses Problems ist erfindungsgemäß eine Wirbelvorrichtung gemäß Anspruch 1 vorgesehen, umfassend ein Werkzeug, das an einer um eine Drehachse rotierend und längs einer Linearachse linear verschiebbar bewegbaren Spindel angeordnet ist, wobei die Spindel in einem Werkzeuggehäuse aufgenommen ist und über eine mittels eines Antriebsmittels antreibbaren Welle bewegbar ist, wobei die Lagerung der rotatorischen Bewegung und die Lagerung der linearen Bewegung voneinander getrennt sind, wobei die Spindel in einem das Werkzeuggehäuse aufweisenden Werkzeugaggregat angeordnet ist, das austauschbar ist, und wobei die Spindel über eine Kupplung mit der Welle manuell oder automatisch lösbar verbindbar ist.

Erfindungsgemäß sind die beiden Lagerungen für die Dreh- und die Scheibebewegung getrennt vorgesehen, d.h., dass jede Lagerung nur noch mit der Bewegung beaufschlagt wird, für die sie ausgelegt ist. Eine verschleißfördernde Doppelbeanspruchung eines Lagers sowohl durch eine Dreh- als auch eine Schiebebewegung ist vorteilhaft nicht mehr gegeben, was zu einer wesentlichen Verbesserung der Standzeit der Bearbeitungsvorrichtung führt.

Zur Ermöglichung der Trennung der Lagerungen sieht eine vorteilhafte Weiterbildung der Erfindung vor, dass die über das Antriebsmittel rotierend antreibbare Welle in einem Gehäuse drehgelagert, jedoch axial fest aufgenommen ist, wobei das Gehäuse über Linearführungen, gegebenenfalls mittels eines weiteren Antriebsmittels, linear bewegbar ist, oder dass die über das Antriebsmittel linear bewegbare Welle in einem Gehäuse linear bewegbar, jedoch drehfest gelagert ist, wobei das Gehäuse, gegebenenfalls mittels eines weiteren Antriebsmittels, drehbar ist.

Die erfindungsgemäße Bearbeitungsvorrichtung zeichnet sich dadurch aus, dass die rotatorische Bewegung und die axiale Bewegung voneinander getrennt sind. Hierzu sind bevorzugt zwei separate Antriebsmittel vorgesehen, von denen das eine nur für den Drehantrieb und das andere nur für den Linearantrieb zuständig ist, wobei alternativ auch nur ein Antriebsmittel vorgesehen sein kann, das für die eine Bewegung zuständig ist, während die andere Bewegung von dem Antriebsmittel oder aus dem Antriebsstrang abgeleitet wird.

Dabei sind zwei grundlegende Erfindungsalternativen zu unterscheiden. Nach einer ersten Alternative wird die zentrale Welle, mit der die Werkzeugwelle bzw. Spindel verbunden ist, nur noch rotierend angetrieben, nicht aber axial verschoben. Die axiale Bewegung ist zwar selbstverständlich gegeben, wird jedoch von der Rotationsbewegung entkoppelt darüber realisiert, dass die Welle in einem Gehäuse angeordnet ist, das seinerseits samt Welle axial bewegt wird.

Dies ermöglicht es nun, das gesamte Werkzeugaggregat mit dem axial bewegten Gehäuse zu koppeln, mithin also das gesamte Werkzeugaggregat axial zu bewegen und nicht nur die das Werkzeug tragende Spindel, wie dies im Stand der Technik der Fall ist, wo wie beschrieben die Spindel axial relativ zum lagefesten Werkzeuggehäuse bewegt wird. Das heißt, dass bei der erfindungsgemäßen Bearbeitungsvorrichtung, z.B. in Form einer Wirbelvorrichtung, die Spindel relativ zum Werkzeuggehäuse lediglich dreht, sich jedoch nicht axial bewegt, da infolge der Entkopplung der rotatorischen und der axialen Bewegung in Bezug auf die zentrale Welle wie auch die mit ihr gekoppelte Werkzeugspindel das gesamte Werkzeugaggregat verfahren wird. Infolgedessen wirkt auf die Spindellagerung keine Axialbewegung, die aus einer Spindelverschiebung resultieren würde, und die die hohe Beanspruchung im Stand der Technik verursacht. Vielmehr agiert ein Spindellager als reines Radiallager, wie es ausgelegt ist. Ein erhöhter Verschleiß ist damit nicht mehr gegeben, vielmehr kann die Standzeit des Werkzeugaggregats bei der erfindungsgemäßen Bearbeitungsvorrichtung wesentlich verbessert werden.

Nach einer zweiten Erfindungsalternative erfolgt die Bewegung der zentralen Komponenten, nämlich der Welle und des Gehäuses umgekehrt. Hiernach ist die Welle in dem Gehäuse linear bewegbar, jedoch drehfest aufgenommen, während das Gehäuse drehgelagert ist und mittels des weiteren Antriebsmittels gedreht wird, so dass auch die Welle rotiert. Die Spindel erfährt nur noch eine Linearbewegung, wozu sie entsprechend im Gehäuse gelagert ist. Die Rotationsbewegung ist auch hier gegeben, jedoch wird hierzu das Gehäuse, in dem die Welle zwar linear bewegbar, jedoch drehfest aufgenommen ist, rotiert. Damit kann auch bei dieser Alternative eine auf die Linearbewegung ausgelegte Wellenlagerung vorgesehen werden, da keine direkte Wellenrotation gegeben ist. Damit ist auch hier kein erhöhter Verschleiß mehr gegeben.

Da die zentrale Welle je nach Erfindungsalternative lediglich gedreht oder linear bewegt wird, ihr jedoch keine Vorrichtung zur axialen oder drehenden Wellenbewegung unmittelbar zugeordnet ist, ist es möglich, die Welle entsprechend kurz auszuführen und sie über zwei Lagermittel, von denen das eine im Bereich des vorderen und das andere im Bereich des hinteren Wellenendes angeordnet ist, zu lagern. Auch diese Lagerung kann, da die Wellenlagerung wie beschrieben im selbst axial oder drehend bewegten Gehäuse erfolgt, optimal ausgelegt werden, da die zu verwendenden Lagermittel wiederum je nach Erfindungsalternative lediglich rotativ, nicht aber translatorisch, oder umgekehrt beaufschlagt werden. Auch hier bieten sich geeignete Radial- bzw. Linearlager an, die entsprechend ausgelegt werden, um die Welle steif und spielfrei zu lagern.

Da im Fall der rotierend angetriebenen Welle jedoch die Welle trotz allem über das Gehäuse axial bewegt wird, kann es erforderlich sein, sie über eine diese Axialbewegung berücksichtigende Verbindung mit dem gehäuseexternen Dreh-Antriebsmittel, beispielsweise einem Rädergetriebe oder einem Zugmitteltrieb, zu verbinden. Hierzu ist die Welle mit diesem gehäuseexternen Dreh-Antriebsmittel über eine drehfeste, jedoch eine Axialbewegung der Welle bezüglich des lagefesten Antriebsmittels erlaubende Verbindung gekoppelt, beispielsweise mit einem Triebrad eines Rädergetriebes oder einer Zugmittelscheibe oder einem Zugmittelrad eines Zugmitteltriebs (Riemen- oder Kettentrieb), mit welchem Triebrad oder Zugmittelscheibe oder Zugmittelrad die Welle drehfest, jedoch axial beweglich verbunden ist, was über eine Kugelbüchse oder eine Vielkeilwelle möglich ist. Eines der beiden, die Welle lagernden Lagermittel ist axial lagefest im Bereich dieser Verbindung angeordnet und dient gleichzeitig der Lagerung der Riemenscheibe. Die Welle führt sich in dem Triebrad oder der Zugmittelscheibe, wobei das Triebrad oder die Zugmittelscheibe von dem Lager geführt ist. Über die Vielkeilwelle oder Axialkugelbüchse wird also das Drehmoment querkraft- und spielfrei in die Welle eingeleitet.

Ist die Welle gemäß der zweiten Erfindungsalternative linear bewegbar im axial festliegenden Gehäuse angeordnet, das seinerseits gedreht wird, so ist für eine die Linearbewegung erlaubende, gleichzeitig aber drehfeste Verbindung zwischen Welle und Gehäuse ebenfalls z.B. eine Vielkeil- oder Polygonverbindung verwendbar. Das dem Drehantrieb dienende Antriebsmittel ist drehfest mit dem Gehäuse verbunden, beide sind axial gesehen positionsfest. Dies ermöglicht es, einerseits das Gehäuse zu drehen und die Drehbeweung über die drehfeste Verbindung zur Welle auf diese zu übertragen, gleichzeitig aber auch die Welle axial zu bewegen und im sich drehenden Gehäuse in beide Richtungen zu verschieben.

Alternativ zur Verwendung eines gehäuseexternen Dreh-Antriebsmittels beispielsweise in Form des beschriebenen Räder- oder Zugmitteltriebs ist es auch denkbar, das dem Drehantrieb dienende Antriebsmittel über einen Elektromotor zu realisieren, dessen Stator axial ortsfest angeordnet und dessen Rotor je nach Erfindungsalternative entweder mit der Welle oder dem Gehäuse verbunden ist. Hier ist also ein "berührungsloser" Antrieb realisiert. Wird die Welle hierüber angetrieben, so kann der Rotor entweder fest an der Welle angeordnet werden, mithin also relativ zum Stator bewegt werden, weshalb er bevorzugt etwas länger als der Stator ist, da er an der translatorischen Bewegung teilnimmt, so dass stets eine vollständige Überdeckung gegeben ist. Alternativ ist es aber auch denkbar, den Rotor ebenfalls axial ortsfest anzuordnen, jedoch über eine geeignete Verbindung wie eine Vielkeilverbindung oder eine Axialkugelbüchse wiederum mit der Welle zu koppeln, um sein Drehmoment in die Welle einzuleiten.

Wie beschrieben kann auch nur ein Antriebsmittel vorgesehen sein, das für eine Bewegungsart zuständig ist, während die zweite von ihm bzw. seiner erzeugten Bewegung abgeleitet wird. Je nach Ausgestaltung ist also nur ein Antriebsmittel vorgesehen, das entweder dem Drehantrieb der Welle oder des Gehäuses dient, und von dem die Linearbewegung des Gehäuses oder der Welle abgeleitet ist, oder das der Linearbewegung der Welle oder des Gehäuses dient, und von dem der Drehantrieb des Gehäuses oder der Welle abgeleitet ist. Z.B. kann der Drehantrieb der Welle über einen Motor, der mit der Welle über eine Kegelradverbindung gekoppelt ist, erfolgen, während der Linearantrieb des die Welle beinhaltenden Gehäuses über einen Kurbeltrieb davon abgeleitet wird. Auch andere mechanische Kopplungen bzw. Ableitungen sind denkbar.

Das dem Linearantrieb dienende Antriebsmittel kann gemäß einer besonders zweckmäßigen Weiterbildung der Erfindung wenigstens einen Linearmotor umfassen, wobei das Primärteil axial ortsfest angeordnet ist, während das Sekundärteil am linear geführten Gehäuse oder der linear geführten Welle angeordnet ist. Grundsätzlich ist bereits ein Linearamotor ausreichend. Ist das Gehäuse linear bewegbar, so ist das Primärteil bevorzugt seitlich am Gehäuse angeordnet. Aus Symmetriegründen werden bevorzugt zwei einander gegenüberliegende Linearmotoren eingesetzt, so dass sich die Anziehungskräfte aufheben und die Wärmeeinbringung symmetrisch ist. Bei linear bewegter Welle hingegen ist der Linearmotor als zylindrischer Motor ausgeführt. Er befindet sich in axialer Verlängerung der Welle, sein im zylindrischen Primärteil linear und drehbar gelagertes Sekundärteil ist mit der Welle axial verbunden. Linearmotoren zeichnen sich durch Verschleißfreiheit und hohe Regelgüte und Antriebsdynamik aus. Sie lassen insbesondere auch eine variable Linearbewegung zu, da die Linearbewegung natürlich abhängig von der Ansteuerung der Primärteile ist. Das heißt, dass keine wie im Stand der Technik gegebene starre sinusförmige Linearbewegung gegeben ist, vielmehr ist eine extrem variable und konkreten Bearbeitungsaufgaben anpassbare Steuerung möglich.

Dabei können, insbesondere wenn das Gehäuse linear bewegbar ist, das oder die Primärteile gegen Federelemente, und gegebenenfalls gegen Dämpfer, an einem Vorrichtungsgestell verschiebbar gelagert sein, um eine Impulsentkopplung gegenüber der Maschine zu erreichen. Diese Federelemente sind derart angeordnet, dass das oder die Primärteile axial verschieblich gegen diese Federelemente bewegbar sind. Bevorzugt wird die Gestellmasse ebenfalls sehr groß realisiert.

Alternativ zur Verwendung des oder der beschriebenen Linearmotoren ist es denkbar, dass das weitere, dem Linearantrieb dienende Antriebsmittel eine Pleuelstange umfasst, die mit dem Gehäuse gekoppelt ist. Bei dieser Erfindungsausgestaltung ist ein rein mechanischer Antrieb gegeben. Die Pleuelstange wird über einen Motor getrieben. Hierzu ist die Pleuelstange mit einer mit der Abtriebswelle des Motors verbundenen Kurbel gekoppelt, so dass sich die Linearbewegung bei Motorbetrieb ergibt. Es ist also letztlich ein Kurbeltrieb realisiert, wobei der Hub über einen verstellbaren Exzenter, eben in die genannte Pleuelstange integriert, eingestellt wird.

Eine weitere alternative Ausführung des weiteren, dem Linearantrieb dienenden Antriebsmittels sieht vor, dieses als Kurbeltrieb auszulegen, der über eine Kegelradkopplung vom Dreh-Antriebsmittel abzweigt. Auch dies ist eine rein mechanische Antriebslösung, wobei diese Ausgestaltung nur einen einzigen Antriebsmotor, der sowohl für den Dreh- als auch den translatorischen Antrieb verantwortlich ist, aufweist.

In Weiterbildung der Erfindung kann eine synchron, jedoch in entgegengesetzte Richtung bewegbare Ausgleichsmasse, die mit dem Gehäuse gekoppelt ist, vorgesehen sein. Diese Ausgleichsmasse, die entsprechend der zu bewegenden Masse des Gehäuses nebst seiner integrierten Bauteile ausgelegt ist, ist in geeigneter Weise beispielsweise wiederum über entsprechende mechanische Pleuelstangen- oder Kurbelverbindungen mit dem Gehäuse oder der Welle gekoppelt, so dass eine Bewegung des Gehäuses oder der Welle, unabhängig davon, ob diese nun über Linearmotoren oder die anderen genannten Antriebsmittelalternativen erzeugt wird, zwangsläufig zu einer entgegengesetzten Bewegung der Ausgleichsmasse führt. Denkbar wäre es auch, als Ausgleichsmasse das Primärteil eines Linearmotors, sofern ein solcher als Linearantriebsmittel verwendet wird, zu verwenden, gegebenenfalls unter Anordnung eines Zusatzgewichts, um die Ausgleichsmasse abzugleichen.

Um den translatorischen Antrieb möglichst energieeffizient auszulegen sieht eine besonders vorteilhafte Weiterbildung der Erfindung vor, dass das linear bewegbare Gehäuse oder die Welle in beiden Axialrichtungen gegen einen Federresonator bewegbar ist. Dieser umfasst bevorzugt zwei gegeneinander verspannte Federn, beispielsweise Schraubenfedern, Gasfedern oder Kunststofffedern, die mit einem Ende gehäuse- oder wellenseitig und mit dem anderen Ende gegen einen axial ortsfesten Anschlag gelagert sind. Diese beiden Federn ziehen beispielsweise bei einem linear bewegten Gehäuse das schlittenartige Gehäuse in die Mittelstellung und bilden mit der translatorisch bewegten Masse (bestehend aus Gehäuse, den daran bzw. darin integrierten Bauteilen sowie dem daran befestigten Werkzeugaggregat) einen Längsschwinger. Die Federkonstante der Federn wird vorzugsweise so gewählt, dass die Eigenfrequenz dieses Längsschwingers dicht oberhalb der gewünschten Schwingfrequenz des sich ergebenden Oszillators während der Bearbeitung liegt. Hierdurch reduziert sich die für die Axialbewegung erforderliche Antriebskraft erheblich. Der Federresonator selbst kann des Weiteren einen Dämpfer umfassen, der die Schwingbewegung bedämpft.

Erfindungsgemäß kann der Federresonator weiterhin in der Steifigkeit seiner Federn veränderbar sein, was es ermöglicht, seine Eigenfrequenz bei Bedarf zu variieren. Die Veränderung der Steifigkeit und damit die Frequenzanpassung kann z.B. dadurch erfolgen, dass jede Feder aus mehreren, hintereinander geschalteten einzelnen Federn, die in einem Gehäuse angeordnet sind, gebildet ist, zwischen denen jeweils ein im Gehäuse verschiebbarer Federteller angeordnet ist, wobei jedem Federteller wenigstens eine über eine geeignete elektrische, pneumatische oder hydraulische Steuerung ansteuerbare Klemmeinrichtung zum axialen Fixieren des Federtellers zugeordnet ist. Über die separat ansteuerbaren Klemmeinrichtungen können die Federteller einzeln und wahlweise axial fixiert werden, so dass die effektive Federlänge und damit die Steifigkeit variabel eingestellt werden kann. Eine solche Klemmeinrichtung kann z.B. ein Klemmbacken, der außen am Federteller angreift, oder ein Klemmstift, der in eine entsprechende Aufnahmen am Federteller eingreift, sein. Jedem Federteller kann eine solche Klemmeinrichtung zugeordnet sein, oder mehrere, die dann simultan anzusteuern wären und an unterschiedlichen Stellen am Federteller angreifen.

Infolge der im einen Fall nicht mehr gegebenen Axialbewegung bzw. der im anderen Fall nicht mehr gegebenen Drehbewegung der Spindel relativ zum Werkzeuggehäuse ist es somit mit besonderem Vorteil möglich, die Spindellagerung im Werkzeuggehäuse zu optimieren. Hierzu ist die Welle bevorzugt über zwei Lagermittel, von denen das eine im Bereich des vorderen und das andere im Bereich des hinteren Wellenendes angeordnet ist, drehgelagert. Das heißt, dass das eine Lagermittel, also z.B. ein erstes Radiallager bei drehgelagerter Welle, nahe der Spindel angeordnet ist, und optimal ausgelegt werden kann, da es keine axiale Bewegungskomponente ermöglichen muss. Entsprechendes gilt für das zweite Lagermittel, also das zweite Radiallager, das sich am aggregatseitigen anderen Ende des Werkzeuggehäuses befindet. Denkbar ist es natürlich, zur Optimierung der Lagerung noch weitere Lagermittel vorzusehen. In jedem Fall ist die Lagerung so auszulegen, dass die Spindel selbst und damit auch die Schneide vollständig, steif und spielfrei gelagert ist, unabhängig davon, ob die Welle dreh- oder lineargelagert ist. Bei Drehlagerung der Welle können die beiden Radiallager auch gegeneinander verspannt sein.

Als ein solches weiteres Lager kann im Falle einer Drehlagerung der Welle beispielsweise ein Nadellager vorgesehen sein, worüber die Abstützung der Welle insbesondere im Schneidenbereich noch verbessert wird.

Grundsätzlich besteht die Möglichkeit, das Werkzeugaggregat mit der Welle zu einer baulichen Einheit zu verbinden bzw. als bauliche Einheit auszuführen. D.h., dass entweder das Werkzeugaggregat nicht lösbarer und damit austauschbarer Teil der Bearbeitungsvorrichtung ist. Die Spindel kann dabei entweder fest mit der Welle verbunden sein, oder Spindel und Welle können als ein Bauteil realisiert sein. Gegebenenfalls ist ein Austausch des spindelseitigen Werkzeugs möglich. Wird die Bearbeitungsvorrichtung ausschließlich für eine bestimmte Bearbeitungsaufgabe verwendet, ist eine solche "starre" Konfiguration mitunter ausreichend. Um jedoch die Verwendungsmöglichkeit der erfindungsgemäßen Bearbeitungsvorrichtung zu erhöhen und die Möglichkeit zu geben, unterschiedliche Bearbeitungsaufgaben mit nur einer Bearbeitungsvorrichtung durchführen zu können, sieht eine zweckmäßige Weiterbildung der Erfindung vor, dass das Werkzeugaggregat austauschbar und die Spindel über eine Kupplung mit der Welle lösbar verbindbar ist, sein es manuell, sei es automatisch. Hiernach kann also das Werkzeugaggregat, das als solches bezüglich einer konkreten mit ihm durchzuführenden Arbeitsaufgabe ausgelegt ist, bei Bedarf gegen ein anderes, bezüglich einer anderen Bearbeitungsaufgabe ausgelegtes Werkzeugaggregat ausgetauscht werden. Ein Innenwirbelaggregat kann also z.B. gegen ein Außenwirbelaggregat ausgetauscht werden, oder gegen ein Fräsaggregat, ein Drehaggregat, ein Schleifaggregat, ein Hohnaggregat, ein Bohraggregat, ein Reibaggregat etc. Die Aufzählung ist nicht abschließend. Damit kann der Einsatzbereich der erfindungsgemäßen Vorrichtung beachtlich erweitert werden.

Dieser erweitere Einsatzbereich kann ferner noch dadurch vergrößert werden, als bei der erfindungsgemäßen Bearbeitungsvorrichtung die beiden Antriebsformen, also Drehantrieb und Linearantrieb, separat zur Verfügung stehen. Jede Antriebsform kann also allein und als Einzelantrieb genutzt werden, da es nicht erforderlich ist, beide Antriebsmittel immer simultan zu betreiben und stets eine Linear- und Drehbewegung einander zu überlagern. Vielmehr ist es möglich, z.B. nur den Linearantrieb zu betätigen, z.B. um eine Stoßbearbeitung vorzunehmen. Ebenso kann nur der Drehantrieb betätigt werden, z.B. zur Ausbildung einer Nut oder eines Einstichs. Dazu ist lediglich zum einen das entsprechende Werkzeugaggregat anzubringen, was über eine entsprechende Kupplung auch manuell einfach zu bewerkstelligen ist, bevorzugt aber, insbesondere bei Ausgestaltung der Vorrichtung als Bearbeitungszentrum, automatisch über eine Werkzeugwechseleinrichtung erfolgt. Sodann ist lediglich die entsprechende Bewegungsform zu wählen, also steuerungseinrichtungsseitig zu definieren, wonach die geforderte Bearbeitung erfolgen kann. Mit einer Bearbeitungsmaschine können also eine Vielzahl unterschiedlicher Bearbeitungsvorgänge abgearbeitet werden, die bisher oft nur mittels unterschiedlicher Maschinen durchgeführt werden konnten.

Bei der erfindungsgemäßen Bearbeitungsvorrichtung mit auswechselbarem Werkzeugaggregat wird folglich das Werkzeuggehäuse mit dem Gehäuse, in dem die Welle angeordnet ist, verbunden, so dass das gesamte Werkzeugaggregat mitbewegt wird, sei es linear, wenn das Gehäuse linear bewegt wird, sei es rotativ, wenn das Gehäuse gedreht wird, je nach Erfindungsalternative. Zu diesem Zweck ist am Werkzeuggehäuse ein erster Verbindungsabschnitt und am Gehäuse ein zweiter Verbindungsabschnitt vorgesehen, die in der Montagestellung eine Formschlussverbindung eingehen. Hierüber wird also eine definierte Schnittstelle zwischen Werkzeuggehäuse und Wellengehäuse erzeugt. Diese beiden Abschnitte sind bevorzugt als Kegelabschnitte mit Plananlage ausgeführt, denkbar sind aber auch Ausführungen als Polygonschaft, Zylinderschaft oder Kegel jeglicher Art.

Die Kupplung, über die eine steife und spielfreie Verbindung der Spindel mit der Welle erfolgt, und über die die Drehbewegung übertragen wird, ist als axiale Steckkupplung, insbesondere als Klauen- oder Vielzahnkupplung, ausgeführt. Eine solche axiale Steckkupplung ermöglicht mit besonderem Vorteil auch einen automatischen Werkzeugwechsel. Die Kupplung ist so auszulegen, dass eine verdrehsteife Verbindung erfolgt, die jedoch minimale axiale bzw. winklige Versetzungen gegebenenfalls ausgleichen kann. Sie kann vorzugsweise auch so ausgeführt werden, dass sie ein gegenüber Stahl erhöhtes Dämpfungsvermögen hat, z.B. um Rotationsschwingungen durch den beim Wirbeln zwangsläufig gegebenen unterbrochenen Schnitt zu dämpfen.

Gemäß einer zweckmäßigen Weiterbildung der Erfindung ist vorgesehen, dass das Werkzeuggehäuse und die Spindel nur in einer definierten Stellung am Gehäuse ankuppelbar sind, das heißt, dass die Schnittstelle so ausgeführt wird, dass sowohl das Werkzeuggehäuse als auch die Spindel nur in einer definierten Winkelstellung gekuppelt werden können. Dies ermöglicht es, beim Werkzeugwechsel stets eine definierte Ausgangslage einzunehmen, um sicherzustellen, dass sich das Schneidwerkzeug in einer definierten Position befindet. Zu diesem Zweck ist bevorzugt eine Arretiervorrichtung zur Fixierung der Spindel im nicht gekuppelten Zustand vorgesehen. Hierüber wird sichergestellt, dass die Winkelstellung der Spindel relativ zum Werkzeuggehäuse im nicht angekuppelten Werkzeugaggregat nicht unbeabsichtigt verstellt wird. Die Arretiervorrichtung kann beispielsweise einen gegen ein Federelement bewegbaren Arretierstift aufweisen, der zum Fixieren über das Federelement in eine Arretieraufnahme an der Spindel oder Kupplung, also dem im Werkzeuggehäuse vorgesehenen Kupplungsteil, eingeführt wird, und beim Bewegen in die Montagestellung automatisch aus der Arretierstellung bewegt wird. Das heißt, dass beim Entfernen des Werkzeugaggregats der Arretierstift bzw. ein vergleichbares Formelement in eine entsprechende Arretieraufnahme an der Spindel oder der Kupplung zwangsläufig weil über das Federelement veranlasst eingreift, bevor die Orientierung durch die aggregatseitige Kupplung außer Eingriff gerät. In umgekehrter Weise wird die Arretiervorrichtung beim Ankuppeln automatisch wieder freigegeben.

Wie beschrieben liegt ein wesentlicher Vorteil der erfindungsgemäßen Trennung beider Antriebe darin, sie auch separat voneinander nutzen zu können, um bestimmte, nur eine Antriebsform erfordernde Arbeiten durchführen zu können. Um sicherzustellen, dass die hierbei auf die Bearbeitungsvorrichtung wirkenden Axialkräfte z.B. beim Bohren, wo keine Linearbewegung nötig ist, aufgenommen werden können, sieht eine Weiterbildung der Erfindung eine Vorrichtung zum Klemmen des linear bewegbaren Gehäuses oder der linear bewegbaren Welle, um dieses oder diese zeitweise axial zu fixieren, vor. Hierüber kann also das über den Linearantrieb linear bewegte Bauteil dann, wenn diese Bewegung nicht gefordert ist, zusätzlich mechanisch fest geklemmt werden, damit die Axialkräfte nicht auf den Linearantrieb wirken. Alternativ ist es auch möglich, die rotatorische Bewegungsachse zu klemmen, z.B. für eine Stoß- oder Ziehbearbeitung am Werkstück. Auch können beide Klemmmöglichkeiten gemeinsam vorgesehen sein, so dass je nach Bearbeitungsaufgabe entweder die Linearachse oder die Drehachse fixiert werden kann. Eine solche Klemmvorrichtung kann z.B. geeignete und über ein Stellelement betätigbare Klemmbacken oder Klemmstifte o.dgl., die je nach Ausgestaltung am Gehäuse oder der Welle angreifen, aufweisen. Die Klemmvorrichtung wird über eine geeignete elektrische, pneumatische oder hydraulische Steuerung angesteuert.

Während die Schnittstelle nebst Kupplung zur lage- bzw. orientierungsdefinierten Anordnung des Werkzeugaggregats relativ zum Gehäuse dient, sind zur endgültigen Befestigung des Werkzeugaggregats am Gehäuse entsprechende Verbindungsmittel vorgesehen, die eine lösbare und damit auswechselbare Anbindung des Werkzeugaggregats am Gehäuse ermöglichen. Diese Verbindungsmittel können quasi beliebiger Natur sein, solange sie eine feste Fixierung des Werkzeuggehäuses am Gehäuse ermöglichen. Bevorzugt sind sie als Bajonettverriegelung ausgeführt, die auch einer automatischen Betätigung zugänglich ist, da bei einer Bajonettverriegelung nur eine relativ geringe Bewegung zum Öffnen und Schließen der Verriegelung erforderlich ist. Eine solche Bajonettverriegelung weist am Gehäuse einen drehbaren Bajonettring mit mehreren radial nach innen gerichteten Vorsprüngen und am Werkzeuggehäuse einen Verriegelungsabschnitt mit mehreren radial nach außen gerichteten Vorsprüngen auf, wobei zur axialen Bewegung des Werkzeuggehäuses relativ zum Gehäuse entweder beim Verdrehen des Bajonettrings aufeinander auflaufende Flächen der einander hintergreifenden Vorsprünge zumindest teilweise schräg verlaufen, oder wobei der Bajonettring über ein Gewinde axial bewegbar am Gehäuse angeordnet ist. Die jeweiligen Vorsprünge sind so angeordnet und in ihrer Länge ausgeführt, dass sich das Öffnen und Schließen beispielsweise mit einer Verdrehung des Bajonettrings um 45° bewerkstelligen lässt. Um das Werkzeuggehäuse in feste Anlage zum Gehäuse zu bringen, und beispielsweise bei Ausführung der Schnittstelle als Kurzkegel mit Plananlage den Formschluss endgültig zu erreichen, ist es erforderlich, über die Bajonettverriegelung das Werkzeuggehäuse ein wenngleich sehr kurzes Stück axial zum Gehäuse zu ziehen. Diese Axialbewegung kann entweder über entsprechende Schrägflächen an den Vorsprüngen, die einander hintergreifen, realisiert sein, oder über eine Gewindelagerung des Bajonettrings, so dass dieser bei seiner Verdrehung axial zum Gehäuse wandert und es insgesamt zu einer axialen Verspannbewegung kommt.

Wie bereits beschrieben ist eine solche Bajonettverriegelung besonders geeignet, um automatisch betätigt zu werden. Hierzu kann am Bajonettring ein Formelement, beispielsweise ein Vorsprung oder dergleichen, vorgesehen sein, an dem bei einem Werkzeugwechsel ein Betätigungselement einer automatischen Werkzeugwechselvorrichtung zum Bewegen des Bajonettrings angreift. Über den Betätiger ist es lediglich erforderlich, eine Drehbewegung des Bajonettrings zu erwirken. Der Betätiger selbst ist Teil einer automatischen Wechselvorrichtung und kann so ausgeführt werden, dass er den Bajonettring drehwinkelüberwacht und drehmomentgesteuert anzieht und löst. In der Anzugsstellung wird er anschließend um einen geringen Betrag, z. B. 0,1 mm, zurückgestellt, damit ein Bewegungsspiel zwischen Betätiger und Bajonettring entsteht. Da bei linear bewegtem Gehäuse der Axialhub des Gehäuses und damit auch des Werkzeugaggregats in der Regel nur wenige Millimeter, üblicherweise etwa 20 mm, beträgt, können der Betätiger und der Bajonettring auch so ausgeführt werden, dass beide nie außer Eingriff geraten. Dann ist eine (stationäre) Stellungsabfrage des Betätigers zugleich eine eindeutige Stellungsabfrage des Bajonettrings und damit eine eindeutige Information, dass das Werkzeugaggregat stets in einer korrekten angekoppelten Position ist. Zudem ist der Bajonettring über den dauerhaft eingreifenden Betätiger auch gegen unbeabsichtigtes Lösen gesichert. Alternativ oder zusätzlich kann der Bajonettring auch über andere Mittel gegen unbeabsichtigtes Lösen gesichert sein, beispielsweise durch federnde Rastelemente oder dergleichen.

Zweckmäßigerweise ist ferner eine das Gehäuse und gegebenenfalls, zumindest teilweise, das zweite Antriebsmittel umgebende Einhausung vorgesehen, durch die ein gasförmiges Kühlmittel, insbesondere gekühlte Luft, geführt wird. Diese Einhausung ist weitgehend luftdicht, so dass eine definierte Kühlmittelzirkulation ermöglicht ist. Im Übergangsbereich dieser Einhausung zum Werkzeuggehäuse kann ein sehr schmaler Dichtspalt verbleiben, wobei ein geringer Durchtritt des Kühlmittels hier nicht schädlich ist, vielmehr dient diese als abdichtende Sperrluft an den einander gegenüberliegenden Kreisringflächen zwischen der entsprechenden Einhausungsöffnung und der gegenüberliegenden Ringfläche des Werkzeuggehäuses.

Neben der Bearbeitungsvorrichtung selbst betrifft die Erfindung eine Bearbeitungsmaschine, umfassend eine Bearbeitungsvorrichtung der beschriebenen Art. Diese Bearbeitungsmaschine weist ein entsprechendes Maschinengestell auf, an dem die Bearbeitungsvorrichtung angeordnet ist. Am Maschinengestell sind weitere Maschinenteile angeordnet, z.B. die Werkstückaufnahme nebst Antrieb etc. Dabei kann das Maschinengestell eine beliebige Form aufweisen. Es kann sich z.B. um ein C-förmiges Gestell bzw. eine C-förmig ausgelegte Maschine handeln, an dem oder der die Bearbeitungsvorrichtung vertikal stehend angeordnet ist, also die Linearachse vertikal verläuft. Das Maschinengestell bzw. die Maschine selbst kann auch U-förmig ausgelegt sein, so dass die Bearbeitungsvorrichtung horizontal liegt, sich also die Linearachse horizontal erstreckt. Ferner ist jedweder Zwischenwinkel hinsichtlich der Ausrichtung der Bearbeitungsvorrichtung, die gegebenenfalls auch um eine Horizontalachse schwenkbar am Maschinengestell angeordnet sein kann, denkbar.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung einer erfindungsgemäßen Bearbeitungsmaschine mit einer erfindungsgemäßen Bearbeitungsvorrichtung in Form einer Wirbelvorrichtung mit zugeordnetem Werkstück,
- Fig. 2: eine vergrößerte Detailansicht des Antriebsaggregats der Wirbelvorrichtung mit angeordnetem Werkzeugaggregat,
- Fig. 3: eine Schnittansicht durch das Antriebsaggregat und das Werkzeugaggregat gemäß Fig. 2,
- Fig. 4: eine vergrößerte Detailansicht als Schnitt durch das Werkzeugaggregat,
- Fig. 5: eine vergrößerte Detailansicht im Schnitt durch die wesentlichen Komponenten des Antriebsaggregats,
- Fig. 6: eine Perspektivansicht des Werkzeugaggregats mit Blick auf die Kupplung,
- Fig. 7: eine Perspektivansicht des Antriebsaggregats mit Blick auf die Kupplung,
- Fig. 8: eine Prinzipdarstellung einer weiteren Ausführungsform des zweiten Antriebsmittels mit Ausgleichsmasse,
- Fig. 9: eine Prinzipdarstellung einer weiteren Ausführungsform einer Kopplung des Gehäuses mit einer Ausgleichsmasse über Zahnstangen,
- Fig. 10: eine Prinzipdarstellung einer weiteren Ausführungsform der Kopplung des Gehäuses mit einer Ausgleichsmasse über ein Zugmittel,
- Fig. 11: eine Prinzipdarstellung einer weiteren Ausführungsform des zweiten Antriebsmittels als Pleuelstangenantrieb,
- Fig. 12: eine weitere Ausgestaltung eines zweiten Antriebsmittels eines Kurbeltriebs, abgeleitet vom ersten Antriebsmittel,
- Fig. 13: eine weitere Ausführungsform mit einem Elektromotor als Dreh-Antriebsmittel,
- Fig. 14: eine Ausführungsform mit axial zum Gehäuse angeordnetem Linearmotor für die Linearbewegung des Gehäuses,
- Fig. 15: eine Ausführungsform mit linear bewegbarer Welle und drehbarem Gehäuse,
- Fig. 16: eine Teilansicht einer Bearbeitungsvorrichtung entsprechend Fig. 15, jedoch mit wechselbarem Werkzeugaggregat,
- Fig. 17: eine Prinzipdarstellung einer Bearbeitungsvorrichtung mit Klemmmittel für die Linearachse, und
- Fig. 18: eine Prinzipdarstellung eines in seiner Steifigkeit veränderbaren Federpakets.

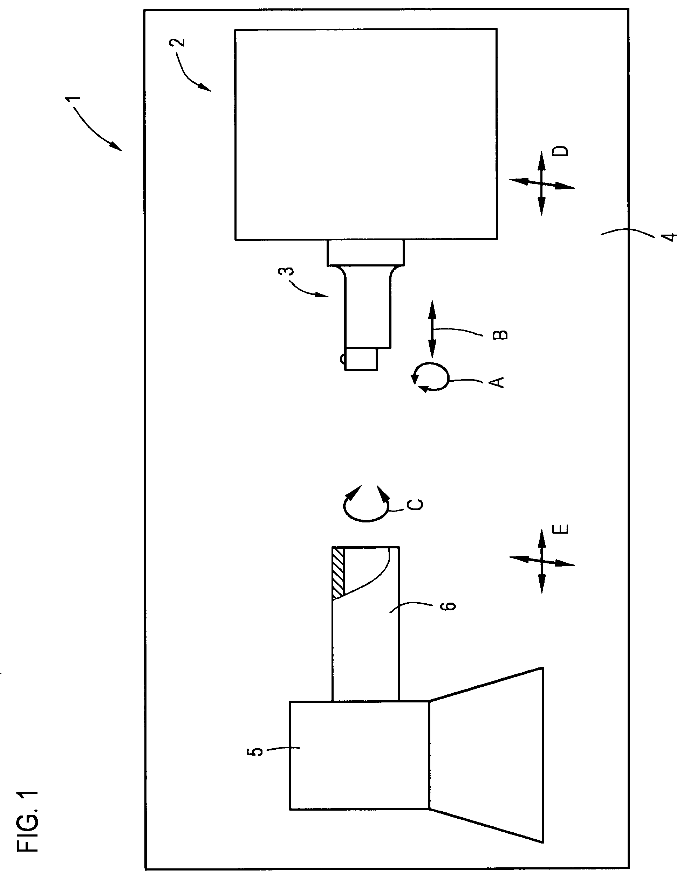

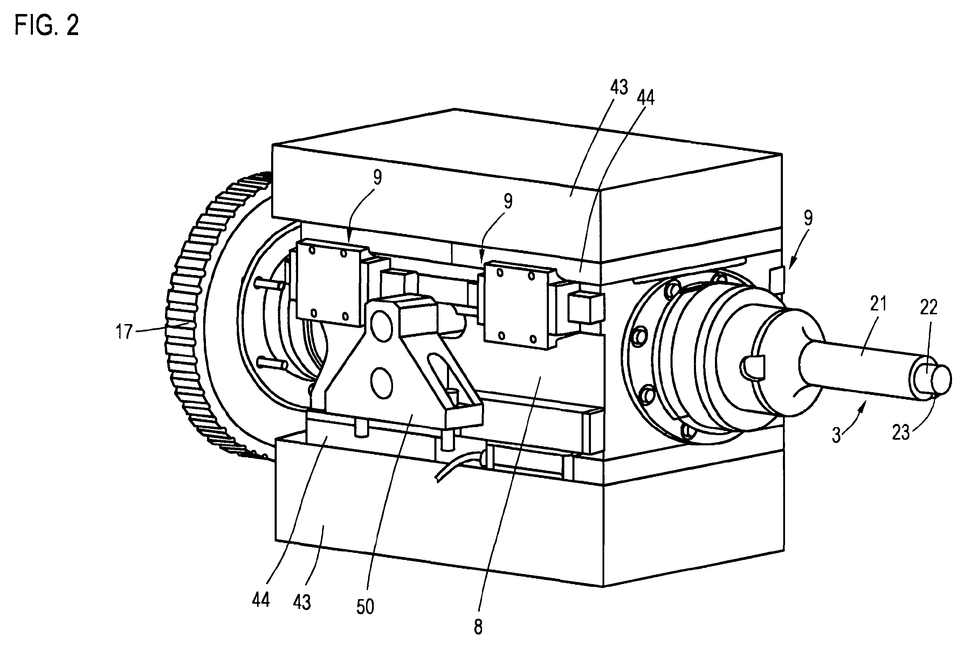

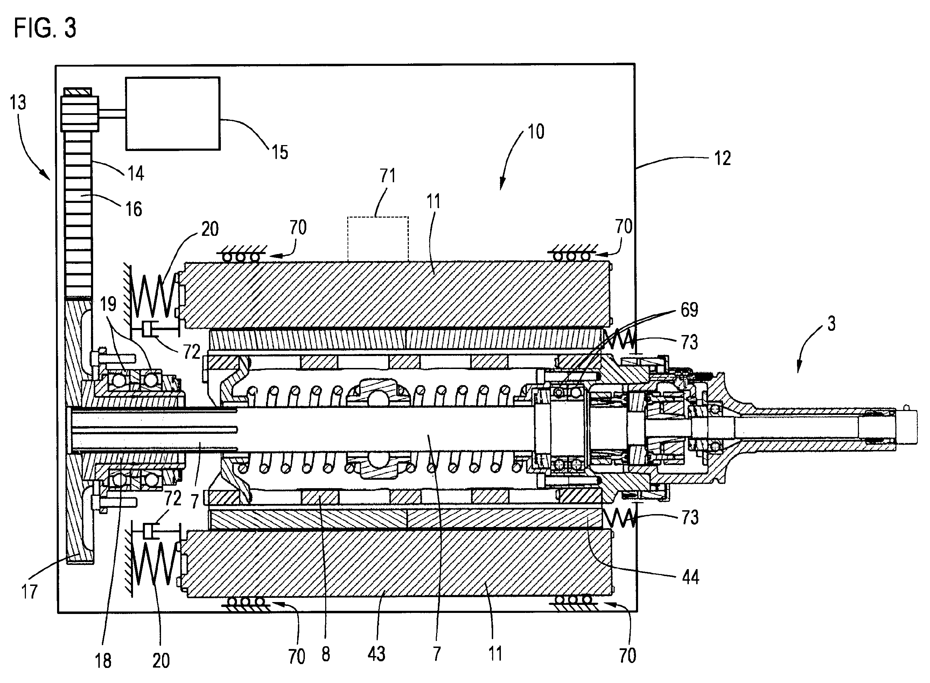

Fig. 1 zeigt in Form einer Prinzipdarstellung eine erfindungsgemäße Bearbeitungsmaschine mit einer erfindungsgemäßen Bearbeitungsvorrichtung in Form einer Wirbelvorrichtung 1 umfassend ein Antriebsaggregat 2 mit daran angeordnetem Werkzeugaggregat 3, wobei das Antriebsaggregat 2 an einem Maschinenbett 4 angeordnet ist. An diesem befindet sich ferner eine Spindel 5 zur Halterung eines Werkstücks 6, das im gezeigten Beispiel mit dem Werkzeugaggregat 3 durch Innenwirbeln zu bearbeiten ist. Das sich während der Bearbeitung drehende Werkstück 6 (Pfeil C) wird zur Bearbeitung an das Werkzeugaggregat 3 herangeschoben, so dass das Werkzeugaggregat in das hohlzylindrische Werkstück 6 einfährt. Zur Bearbeitung dreht die noch näher zu beschreibende Spindel des Werkzeugaggregats 3, wie durch den Pfeil A dargestellt ist, ferner wird das gesamte Werkzeugaggregat 3 zyklisch axial bewegt, wie durch den Doppelpfeil B dargestellt ist. Die Bearbeitungsvorrichtung 1 wie auch die Halterung 5 können zum Zwecke der Ausrichtung in der Horizontalebene am Maschinenbett in x- und y-Richtung über entsprechende Lagermittel verschiebbar gelagert sein, wie durch die Pfeilpaare D und E angedeutet ist. Wenngleich Fig. 1 eine horizontal liegende Wirbelvorrichtung und damit eine quasi U-förmig konzipierte Bearbeitungsmaschine zeigt, ist es auch möglich, die Wirbelvorrichtung 1 vertikal oder unter einem beliebigen Winkel zur Horizontalen stehend anzuordnen. Das Maschinenbett bzw. -gestell kann bei vertikaler Anordnung z.B. im Wesentlichen C-förmig sein, wobei die Wirbelvorrichtung am oberen C-Schenkel und die Spindel 5 zur Werkstückhalterung am unteren, den Maschinentisch bildenden C-Schenkel angeordnet wäre. Der grundsätzliche Aufbau einer solchen Wirbelvorrichtung 1 ist an sich bekannt. Die Fig. 2 und 3 zeigen in Detailansichten die wesentlichen Komponenten des Antriebsaggregats 2 sowie das daran befindliche Werkzeugaggregat 3. Unter gleichzeitiger Bezugnahme auf Fig. 3 umfasst das Antriebsaggregat eine Welle 7, die in einem Gehäuse 8 über Lagermittel 69 drehgelagert aufgenommen ist. Das Gehäuse 8 ist seinerseits über geeignete Linearführungen 9 linear bewegbar, wozu ein zweites Antriebsmittel 10, das hier in Form zweier Linearmotoren 11 ausgeführt ist, vorgesehen ist, worauf nachfolgend noch eingegangen wird. Über diese Linearführungen ist also das Gehäuse 8 nebst der darin befindlichen Welle 7 wie auch das Werkzeugaggregat 3, das am Gehäuse 8 befestigt ist, axial bewegbar, um die translatorische Bewegungskomponente, wie durch den Pfeil B in Fig. 1 dargestellt ist, zu erzeugen. Die Linearführungen 9 selbst sind mit ihrem ortsfesten Teil beispielsweise an einer geeigneten Einhausung 12 angeordnet, die das Antriebsaggregat 2 kapselt und insoweit abdichtet, um die Zirkulation von Kühlluft hierdurch zu ermöglichen.

Die Welle 7 selbst ist mit einem ersten Antriebsmittel 13 in Form eines Zugmitteltriebs, hier in Form eines Riementriebs 14 verbunden. Dieser Riementrieb umfasst einen Antriebsmotor 15, der über den Riemen 16 mit einer Riemenscheibe 17 verbunden ist. An dieser Riemenscheibe 17 befindet sich eine Büchse 18, z.B. eine Kugelbüchse, die über eine geeignete Formschlussverbindung, beispielsweise eine Polygon- oder Keilverbindung, mit der Welle 7 drehfest verbunden ist. Die Büchse 18 und hierüber sowohl die Welle 7 als auch die Riemenscheibe 17 sind über geeignete Lagermittel 19 drehgelagert. Das erste Antriebsmittel 13 selbst ist also ortsfest, um jedoch die Axialbewegung des Gehäuses 8 nebst Welle 7 relativ zur Riemenscheibe 17 zu ermöglichen, ist die Büchse 18 nebst der Polygon- oder Keilverbindung zur Welle 7 vorgesehen. Die Lagermittel 19 sind an geeigneten Befestigungspositionen innerhalb der Einhausung 12 zur Drehlagerung angeordnet.

Die beiden Linearmotoren 11 sind mit ihren Primärteilen 43 über entsprechende Federn 20 zur Impulsentkopplung an geeigneten Befestigungspositionen abgestützt. Die Primärteile 43 sind hierzu entsprechend linear beweglich gelagert, wie in Fig. 3 über die Lagerstellen 70 dargestellt ist. Zum Massenausgleich kann ein einem oder an beiden Primärteilen 43 gegebenenfalls eine Zusatzmasse 71, wie in Fig. 3 gestrichelt angedeutet, vorgesehen sein. Ferner sind die Primärteile 43 über wenigstens einen Dämpfer 72 (alternativ kann auch ein anderes aktives Element verwendet werden) abgestützt. Die mit dem Gehäuse 8 linear beweglichen Sekundärteile 44 der Linearantriebe 11 sind ebenfalls an geeigneten Befestigungspositionen über Federn 73 abgestützt. Hieraus ergibt sich ein Federdämpfungssystem für die Linearantriebe 11. Da die Primärteile axial verschieblich gegen die Federn 20 und die Dämpfer 72 sind, ist es, insbesondere bei Gleichheit der bewegten Massen aus Primärteilen und Gehäuse nebst Anbauteilen, möglich, die Massenkraft beim Beschleunigen des schlittenartigen Gehäuses 8 durch die Massenkraft der Gegenmasse, also der Primärteile, weitgehend oder vollständig aufzuheben. Dies ermöglicht eine Erhöhung des dynamisch-oszillatorischen Verhaltens bei gleicher Masse und gleicher Motorkraft. Auch ist eine Reduzierung des Energieverbrauchs des Antriebs möglich, da die Federn eine Energiespeicherung und -rückgewinnung während der Bewegung ermöglichen. Auch stellt sich ein Tilgereffekt infolge sich aufhebender Federkräfte ein, da sich die Massen gegenphasig bewegen, wie die Federverbindungen auch eine Impulsentkopplung bewirken.

Anstelle des gezeigten Zugmitteltriebs (denkbar ist statt eines Riemens auch eine Kette) kann als Antriebsmittel 13 auch ein über einen Motor betätigtes Rädergetriebe vorgesehen sein. Auch hierbei wäre die Welle 7 über eine geeignete Polygon- oder Keilverbindung relativ zum mit ihr drehfest verbundenen und z.B. ebenfalls über eine Büchse gelagerten Triebrad axial beweglich.

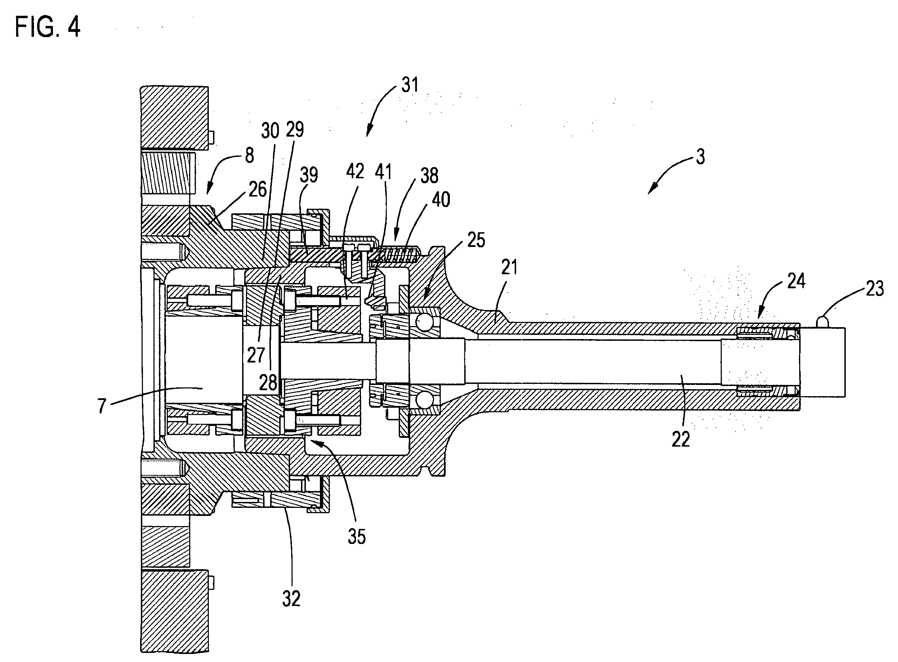

Fig. 4 zeigt eine vergrößerte Schnittansicht durch das Werkzeugaggregat 3. Dieses besteht aus einem Werkzeuggehäuse 21, in dem eine Spindel 22 exzentrisch positioniert und über ein im Bereich des vorderen Spindelendes, an dem das Schneidwerkzeug 23 angeordnet ist, vorgesehenes erstes Radiallager 24 und einem hinteren Spindelbereich vorgesehenes zweites Radiallager 25 drehgelagert ist. Die Radiallager, im gezeigten Beispiel ein kombiniertes Schrägkugel- und Nadellager sowie ein zweites Schrägkugellager, können optimal ausgelegt werden, da sie lediglich rotativ beaufschlagt werden, nicht jedoch eine Axialbewegungskomponente erfahren. Denn wie beschrieben dreht die Spindel 22 lediglich, sie wird nicht mehr, wie jedoch im Stand der Technik üblich, axial relativ zum Werkzeuggehäuse 21 verschoben, da das gesamte Werkzeugaggregat 3 mit dem Gehäuse 8 und der Welle 7 axial bewegt wird.

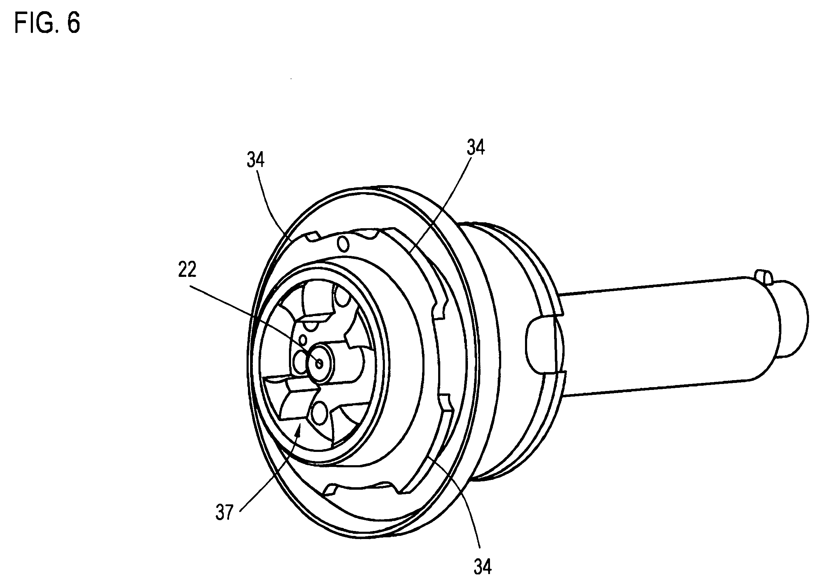

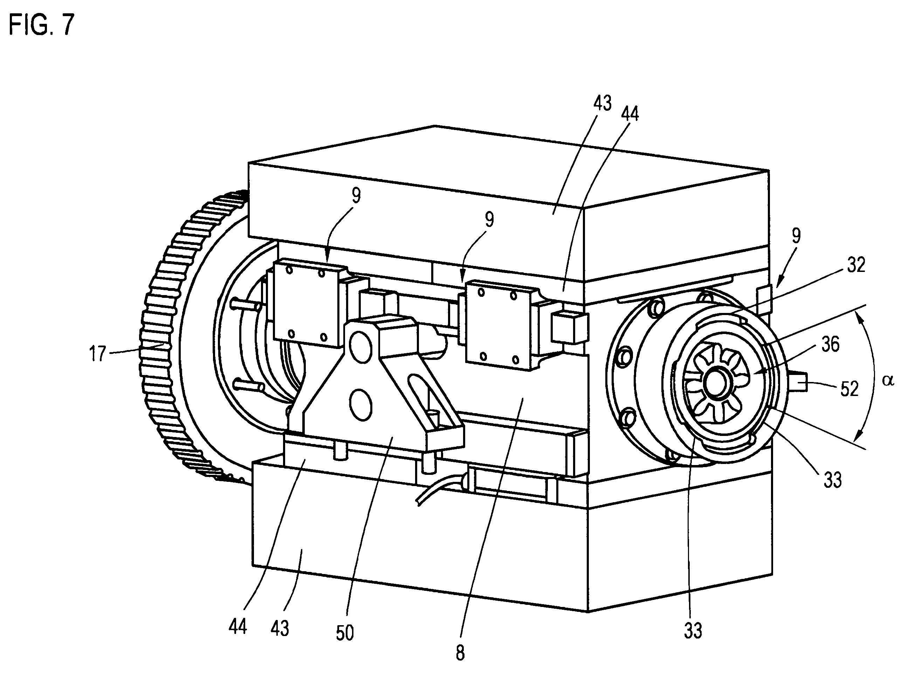

Zur Verbindung des Werkzeuggehäuses 21 mit dem Gehäuse 8 bzw. einem dort vorgesehenen Gehäuseverbindungsbauteil 26 ist eine definierte, formschlüssige Schnittstelle realisiert, und zwar über eine Kurzkegelfläche 27 an einem ersten Verbindungsabschnitt 28 des Werkzeuggehäuses 21 und eine entsprechende kegelige Gegenfläche 29 an einem Verbindungsabschnitt 30 des Gehäuseverbindungsbauteils 26 des Gehäuses 8. In der Montagestellung ergibt sich hierüber ein extrem fester Formschluss, der insbesondere durch die hier vorgesehene Bajonettverriegelung 31 erreicht wird. Diese Bajonettverriegelung umfasst einen Bajonettring 32, der bevorzugt über ein nicht näher gezeigtes Gewinde auf dem Gehäuseverbindungsbauteil 26 (das auch einstückig am Gehäuse vorgesehen sein kann) drehgelagert ist, mithin also bei Verdrehung eine leichte Axialbewegung durchführt. An dem Bajonettring sind, siehe beispielsweise Fig. 7, radial nach innen vorspringende Vorsprünge 33 vorgesehen, die, siehe Fig. 6, entsprechende radial nach außen vorspringende Vorsprünge 34 am entsprechenden Verriegelungsabschnitt des Werkzeuggehäuses 21 beim Verdrehen des Bajonettrings 32 hintergreifen. Über die Gewindelagerung des Bajonettrings 32 erfährt das Werkzeuggehäuse 21 hierbei eine kurze Axialbewegung in Richtung des Gehäuses 8, so dass die beiden Kegelflächen 27 und 29 in feste formschlüssige Anlage gebracht werden.

Hiermit einher geht auch ein endgültiges Schließen der Kupplung 35, die hier als Klauenkupplung ausgeführt ist. Gehäuseseitig ist ein erstes Kupplungsteil 36 vorgesehen, in das die Klauen eines zweiten, werkzeugseitigen Kupplungsteils 37 eingreifen, siehe die Fig. 6 und 7. Hierüber wird eine drehfeste und ein Drehmoment übertragende Verbindung zwischen der Welle 7 und der Spindel 22 erwirkt.

Um sicherzustellen, dass bei einem Werkzeugwechsel das Werkzeugaggregat 3 nur in einer definierten Drehwinkelposition der Spindel 22 und damit des Schneid-Werkzeugs 23 angeordnet werden kann, ist eine Arretiervorrichtung 38 vorgesehen, umfassend einen Betätigungsstift 39, der gegen eine Feder 40 bewegbar ist und an dem ein Arretierstift 41 angeordnet ist, der zum Fixieren in eine entsprechende Arretieraufnahme 42 des Kupplungsteils 37 eingreift, welches ja seinerseits fest mit der Spindel 22 verbunden ist. Wird also das Werkzeugaggregat 3 aus der in Fig. 4 gezeigten Position abgezogen, so entspannt sich die Feder 40 und schiebt dabei den Betätigungsstift 39 und mit ihm den Arretierstift 41 nach links, gesehen in Fig. 4, so dass der Arretierstift 41 in die Arretieraufnahme 42 eingreift.

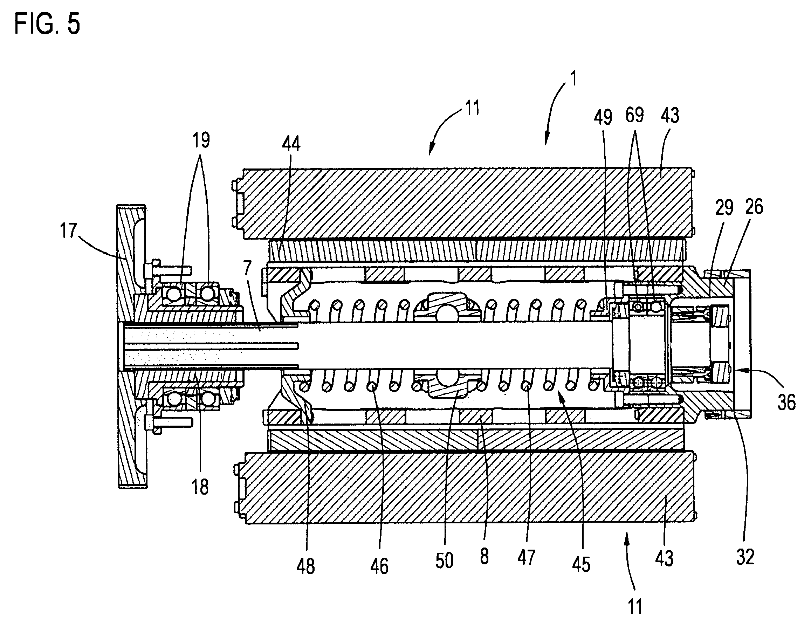

Fig. 5 zeigt in vergrößerter Darstellung die wesentlichen Teile des Antriebsaggregats 2. Wie beschrieben sind hier zwei Linearmotoren 11 vorgesehen, deren Primärteile 43 ortsfest (oder, wie in Fig. 3 gezeigt, zur Impulsentkopplung gegen Federn und Dämpfer linear beweglich, bei entsprechender Abstützung auch der Sekundärteile 44 über Federn gemäß Fig. 3) in der Einhausung 12 an geeigneten Befestigungsstellen angeordnet sind, während die Sekundärteile 44 fest mit dem Gehäuse 8 verbunden sind. Die Sekundärteile 44 werden also mit dem Gehäuse 8, das über die Linearführungen 9 nach Art eines Schlittens linear bewegbar ist, mitbewegt. Während dieser Axialbewegung wandert die Welle 7 in der Büchse 18, da wie beschrieben die Welle 7 axial relativ zum axial gesehen ortsfesten ersten Antriebsmittel 13, hier also der Riemenscheibe 17, bewegt wird.

Im Inneren des schlittenartigen Gehäuses 8 befindet sich ferner ein Federresonator 45, umfassend zwei Federn 46, 47, die an entsprechenden Lagerscheiben 48, 49 mit ihrem einen Ende aufgelagert sind, während das andere Ende an einem ortsfesten Anschlag 50 aufgelagert ist. Dieser ortsfeste Anschlag 50 erstreckt sich aus dem Gehäuse 8 und mündet in entsprechenden Befestigungsschuhen 51, die an geeigneten Befestigungsstellen ortsfest verschraubt werden. Während der höherfrequenten Axialbewegung werden die Federn 46, 47 laufend komprimiert und entspannt, sie bilden insgesamt mit dem mittigen Anschlag 50 einen Längsschwinger. Die Federkonstante der beiden Federn 46, 47 wird so gewählt, dass die Eigenfrequenz dieses Längsschwingers dicht oberhalb der gewünschten Schwingfrequenz des sich insgesamt ergebenden Oszillators während der Bearbeitung liegt. Gegebenenfalls ist es auch denkbar, in den Federresonator einen zusätzlichen Dämpfer zu integrieren, der die Schwingbewegung zusätzlich bedämpft und damit den nutzbaren Frequenzbereich des Federresonators 45 erweitert.

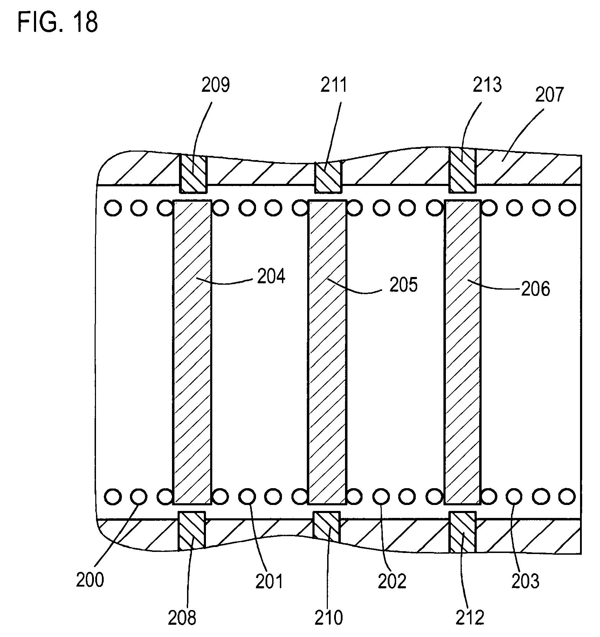

Zur Frequenzanpassung kann in weiterer Ausgestaltung der Erfindung - siehe hierzu die Prinzipdarstellung eines Teils des Federresonators in Fig. 18 - jede der Federn 46 und 47 als Paket aus mehrerer, hintereinander geschalteter Federn 200, 201, 202, 203 ausgebildet werden. Zwischen den Federn befinden sich Federteller 204, 205, 206, welche jeweils in einem Gehäuse 207 axial verschieblich geführt sind. Einzeln ansteuerbare Klemmeinrichtungen 208, 209, 210, 211, 212, 213 ermöglichen es, gezielt einen oder mehrere Federteller axial zu fixieren. Dadurch kann die für die Eigenfrequenz des Federresonators wichtige Steifigkeit des Federpakets und damit der Federn 46, 47 gezielt verändert werden. Die Zahl der einzelnen, das jeweilige Federpaket bildenden Federn und der Federteller nebst Klemmeinrichtungen kann je nach Bedarf gewählt werden.

Bei der erfindungsgemäßen Bearbeitungsvorrichtung, hier in Form der Wirbelvorrichtung 1 sind folglich die rotatorische Bewegung und die axiale Bewegung voneinander getrennt. Im Betrieb arbeiten die beiden Antriebsmittel 10 und 13 separat voneinander, jedoch selbstverständlich synchronisiert. Das erste Antriebsmittel 13 ist ausschließlich für den Drehantrieb der Welle 7 und damit der Spindel 22 nebst Schneidwerkzeug 23 verantwortlich. Die beiden Linearmotoren 11 erwirken ausschließlich die axiale Bewegung des Gehäuses 8 nebst Welle 7 und am Gehäuse 8 befindlichem Werkzeugaggregat 3. Das heißt, dass sämtliche drehenden Komponenten, nämlich Welle 7 und Spindel 22, mit samt der geschlossenen Einheit bestehend aus Gehäuse 8 und Werkzeuggehäuse 21, axial bewegt werden. Eine translatorische Bewegung der Spindel 22 relativ zu den Radiallagern 24 und 25 ist nicht gegeben. Das heißt, dass die beiden Radiallager 24 und 25 keinerlei axiale Bewegungskomponente ermöglichen müssen respektive aufnehmen. Die Standzeit kann hierdurch folglich eklatant verlängert werden. Ein weiterer Vorteil ist, dass keine die axiale Bewegung erwirkenden Bauteile unmittelbar an der Welle 7 oder dieser zugeordnet vorzusehen sind. Aus diesem Grund kann die Welle 7 auch relativ kurz ausgeführt und in ihrer Lagerung optimiert werden, insbesondere was die Steifigkeit des Bauteils wie auch der Lagerung angeht, was sich wiederum genauigkeitsverbessernd auswirkt.

Die Verwendung der Linearmotoren 11 hat ferner den besonderen Vorteil, dass sich ein variables Bewegungsprofil der Axialbewegung durch entsprechende Steuerung der Primärteile erwirken lässt, beispielsweise ein längerer gerader Antteil in der Phase des Schneideingriffs oder höhere Vorschubgeschwindigkeiten in der Ein- und Austrittsphase des Schneidwerkzeugs, um die Spandickenänderung zu verkleinern und Ähnliches.

Die Auswechselbarkeit des Werkzeugaggregats ermöglicht es, je nach Bearbeitungsaufgabe das passende Aggregat zu verwenden. So kann z.B. anstelle des in den Figuren gezeigten Innenwirbelaggregates auch ein Außenwirbelaggregat mit einem entsprechenden an der Spindel 22 angeordneten Außenwirbel-Schneidwerkzeug angekuppelt werden, um auch ein Außenwirbeln vorzunehmen.

Ein zentraler Vorteil der bei allen vorstehend und nachfolgend beschriebenen Ausführungsformen grundsätzlich gegebenen Antriebsentkopplung - unabhängig davon, welche Antriebsrnitteltypen oder -anordnungen oder Bewegungskonzepte konkret verwendet werden - ist, dass es nicht zwingend erforderlich ist, den Drehantrieb zu nutzen. Vielmehr ist es grundsätzlich auch denkbar, nur die Linearantriebe 11 zu nutzen, mithin also über ein geeignetes Werkzeugaggregat 3 eine Stoßbearbeitung mit der Wirbelvorrichtung zur Fertigung axialer Nuten zu realisieren. Alternativ kann auch nur der Drehantrieb genutzt werden, wenn eine Bearbeitung durchzuführen ist, bei der keine Linearbewegung nötig ist, z.B. bei der Erzeugung eines Einstichs o.dgl. unter Verwendung eines geeigneten Werkzeugaggregats. In Verbindung mit der Auswechselbarkeit des Werkzeugaggregats und der damit verbundenen Möglichkeit, je nach gegebener Bearbeitungsaufgabe ein dazu passend ausgelegtes Werkzeugaggregat zu verwenden, kann somit die erfindungsgemäße Bearbeitungsvorrichtung multifunktional eingesetzt werden. Denn mit nur einer Bearbeitungsvorrichtung sind unter Verwendung entsprechender Werkzeugaggregate beliebige spanende und nicht-spanende Arbeitsgänge an einem beliebigen Werkstück, sei es aus Metall, Kunststoff oder einem anderen mechanisch bearbeitbaren Werkstoff, durchführbar. Als grundsätzlich durch Drehung und/oder Translation durchführbare Bearbeitungen sind (nicht abschließend) Wirbeln (innen und außen), Fräsen, Drehen, Schleifen, Reiben, Bohren, oder Hohnen zu nennen.

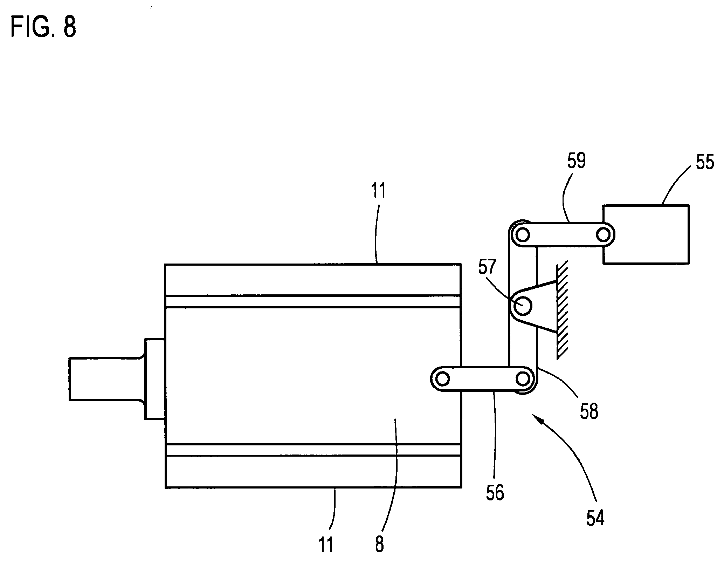

Ein weiterer besonderer Vorteil liegt ferner darin, dass grundsätzlich auch die Möglichkeit für einen automatischen Werkzeugwechsel gegeben ist, insbesondere in Verbindung mit der Arretierung der Spindel 22 beim Werkzeugaustausch. Zur Ermöglichung eines automatischen Werkzeugwechsels befindet sich am Bajonettring 32, siehe beispielsweise Fig. 7, ein Formelement 52, an dem ein geeignetes Betätigungselement einer automatischen Wechselvorrichtung angreift, um den Bajonettring 32 um den definierten Verdrehwinkel α, der siehe Fig. 8, exemplarisch 45° beträgt, zu drehen und so die Bajonettverriegelung zu öffnen oder zu schließen. Da die Kupplung als Steckkupplung ausgeführt ist, ist es ohne weiteres möglich, den Werkzeugwechsel automatisch durch axiales Anstecken und Betätigen der Bajonettverriegelung vorzunehmen.

Beim Werkzeugwechsel besteht für die hier gezeigte überbestimmte Schnittstelle mit Kurzkegel und Plananlage mitunter das Problem, dass das Werkzeugaggregat nur mit sehr großen Kräften zur Plananlage gebracht werden kann. Diese Kräfte können vom Werkzeugwechselmechanismus in der Regel nicht aufgebracht und nicht übertragen werden. Stattdessen werden sie vom Spannmechanismus, hier nämlich dem gewindegängigen Bajonettring 32, in der beschriebenen Weise aufgebracht. Anstelle der beschriebenen Gewindelagerung des Bajonettrings 32 wäre es alternativ auch denkbar, durch entsprechende Schrägflächen an den einander hintergreifenden Vorsprüngen die Axialbewegung zu wirken. In jedem Fall bewirkt dies eine Axialbewegung zwischen Werkzeuggehäuse 21 und Gehäuse 8 während des Spann- und Lösevorgangs. Damit diese Bewegung nicht zu einem Zwang in der Werkzeugwechselvorrichtung führt, kann im Augenblick des Werkzeugwechsels die Reglerfreigabe für die Linearantriebe 11 gelöscht werden. Das Gehäuse 8 wird nun vom Federresonator 45 in Mittellage gehalten. Die Axialbewegung beim Spannen/Lösen des Werkzeugaggregats 3 erfolgt gegen die Kraft der Federn 46, 47. Diese Kraft ist jedoch klein genug, um die Werkzeugwechselvorrichtung vor Überlastung zu schützen. Nach Beendigung des Werkzeugwechsels federt das Gehäuse 8 zurück in die Mittellage. Die Regelungseinrichtung übernimmt die neue Ist-Position als Startposition für die nächste Verfahrbewegung.

Die Fig. 8 bis 12 zeigen weitere verschiedene Ausgestaltungen bezüglich des translatorischen Antriebs in Form reiner Prinzipskizzen.

Fig. 8 zeigt die Verwendung der beiden Linearmotoren 11, wie aus dem zuvor beschriebenen konkreten Ausführungsbeispiel bekannt. Über eine mechanische Stangenverbindung 54 ist eine Ausgleichsmasse 55 mit dem Gehäuse 8 gekoppelt. Die Kopplung ist derart, dass bei einer Bewegung des Gehäuses 8 nebst sämtlicher Anbauteile die Ausgleichsmasse 55, die in ihrem Gewicht natürlich entsprechend ausgelegt und ähnlich schwer wie die direkt angetriebene Masse aus Gehäuse 8 nebst Anbauteilen und Werkzeugaggregat 3 ist, in die entgegengesetzte Richtung bewegt wird. Hierzu ist eine erste Stange 56 vorgesehen, die mit einer um einen Drehpunkt 57 gelagerten Stange 58 verbunden ist, die mit ihrem anderen Ende wiederum an einer zweiten Stange 59 befestigt ist, die mit der ebenfalls linear geführten Ausgleichsmasse 55 verbunden ist. Hierüber kann ein Massenausgleich erfolgen.

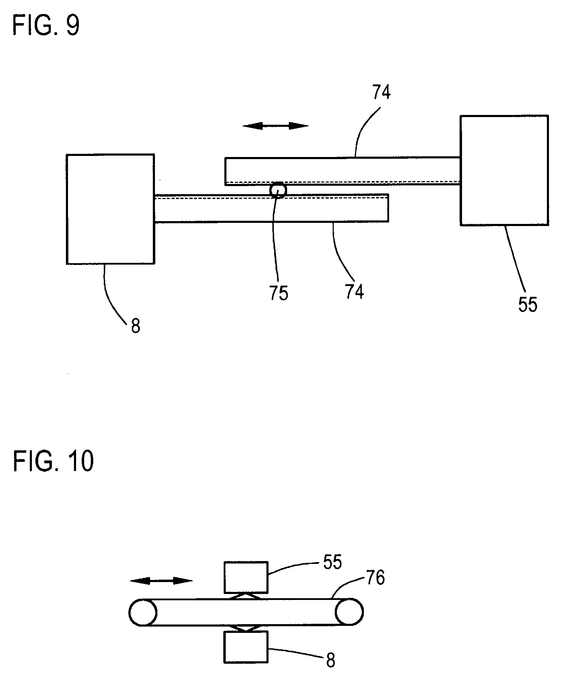

Anstelle der in Fig. 8 gezeigten mechanischen Kopplung des Gehäuses 8 mit der Ausgleichsmasse 55 über die Schwenkstangenverbindung ist es auch denkbar, die Kopplung, wie in Fig. 9 gezeigt, mittels zweier Zahnstangen 74 vorzunehmen, mit denen ein gemeinsames Ritzel 75 in Eingriff steht. Eine Zahnstange 74 ist am Gehäuse 8, die andere an der Ausgleichsmasse 55 angeordnet. Wird das Gehäuse 8 über das Linearantriebsmittel, also z.B. die Linearmotoren 11, in die eine Richtung verschoben, so wird die Ausgleichsmasse 55 über die Zahnstangenkopplung in die entgegengesetzte Richtung bewegt.

Alternativ hierzu ist auch eine Zugmittelkopplung denkbar, wie prinzipiell in Fig. 10 gezeigt. Hierbei ist das schlittenartige Gehäuse 8, das über die Linearantriebsmittel bewegt wird, mit dem einen Trumm eines Zugmittels 76, z.B. eines Riemens oder einer Kette, verbunden, während die Ausgleichsmasse 55 mit dem anderen Trumm des Zugmittels verbunden ist, so dass es bei einer Bewegung des Gehäuses zu einer entgegengesetzten Bewegung der Ausgleichsmasse kommt.

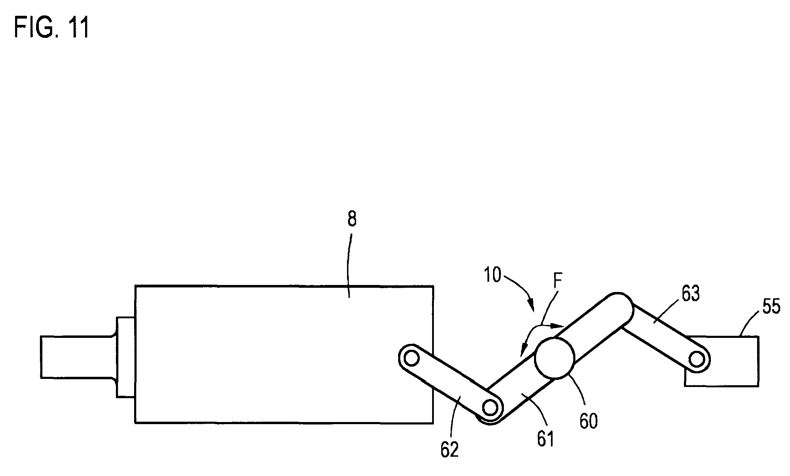

Fig. 11 zeigt als weitere Ausführungsform eines zweiten Antriebsmittels 10 die Ausgestaltung eines Pleuelstangenantriebs. Über einen Antriebsmotor 60 wird eine Kurbelwelle 61 gedreht, an der über eine Pleuelstange 62 das Gehäuse 8 angebunden ist. Optional, wie in Fig. 9 gezeigt, kann über eine weitere Pleuelstange 63 wiederum die Ausgleichsmasse 55 angebunden sein. Bei einer Rotation um den Doppelpfeil F kommt es folglich zwangsläufig zu einer Axialbewegung des linear geführten Gehäuses 8.

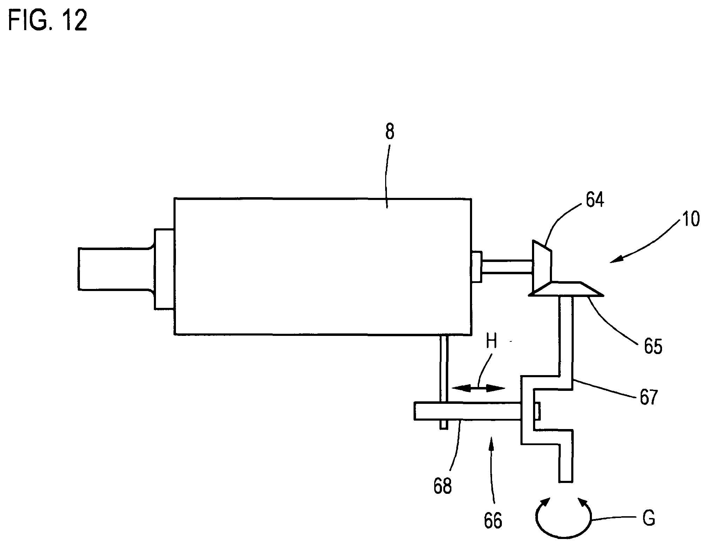

Bei der in Fig. 12 gezeigten Ausführung umfasst das Antriebsmittel 10 zwei Kegelräder 64, 65 sowie einen Kurbeltrieb 66, der neben der sich drehenden Kurbel 67 (siehe Doppelpfeil G) eine axial bewegte Stange 68 (siehe Doppelpfeil H) umfasst, die wiederum mit dem Gehäuse 8 verbunden ist. Hier wird nur ein Antriebsmittel eingesetzt, das den Drehantrieb erwirkt, und von dem die Linearbewegung abgeleitet und auf das Gehäuse übertragen wird.

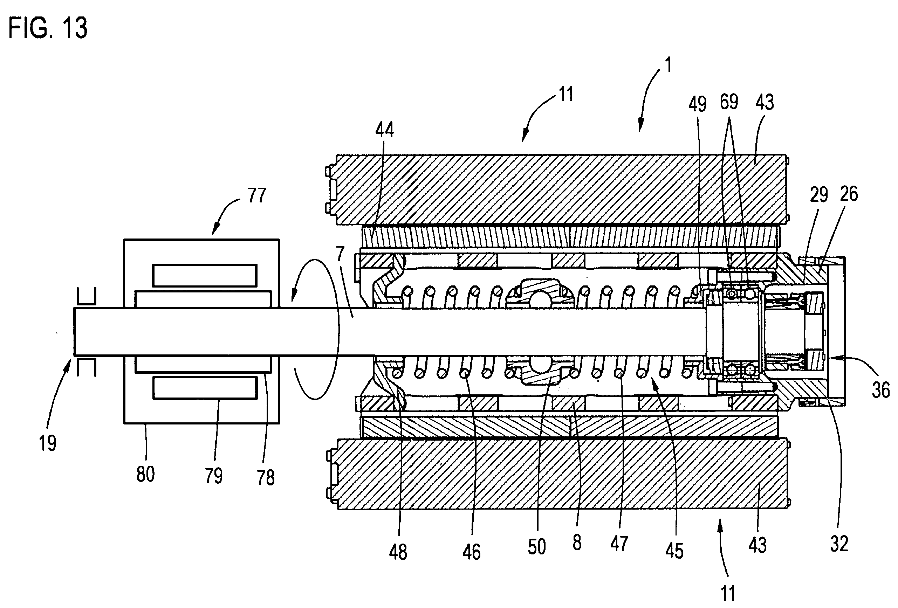

Fig. 13 zeigt als Prinzipdarstellung eine Ausführungsform, bei der als Dreh-Antriebsmittel ein Elektromotor 77 verwendet wird. Der Rotor 78 des Elektromotors ist drehfest mit der Welle 7 verbunden, während der Stator 79 mitsamt dem Motorengehäuse 80 lagefest ist. Im Betrieb wird in an sich bekannter Weise der Rotor 78 über die Feldkopplung zum Stator 79 gedreht, und mit ihm die entsprechend drehgelagerte Welle 7 und die angekuppelte, hier jedoch nicht näher gezeigte Spindel. Zur Linearbewegung des Gehäuses 8 samt Welle 7 sind wiederum die Linearmotoren 11 vorgesehen. Der gezeigte Aufbau im Bereich der Linearantriebe, des Gehäuses und der Anbindung Werkzeugaggregat zum entspricht hier exemplarisch dem, wie er in Fig. 5 gezeigt ist. Wiederum sind die Drehbewegung und die Linearbewegung voneinander entkoppelt. Der Rotor 78 ist etwas länger als der Stator 79, damit sichergestellt ist, dass in jeder axialen Wellenposition eine vollständige Überdeckung des Rotors 78 durch den Stator 79 gegeben ist.

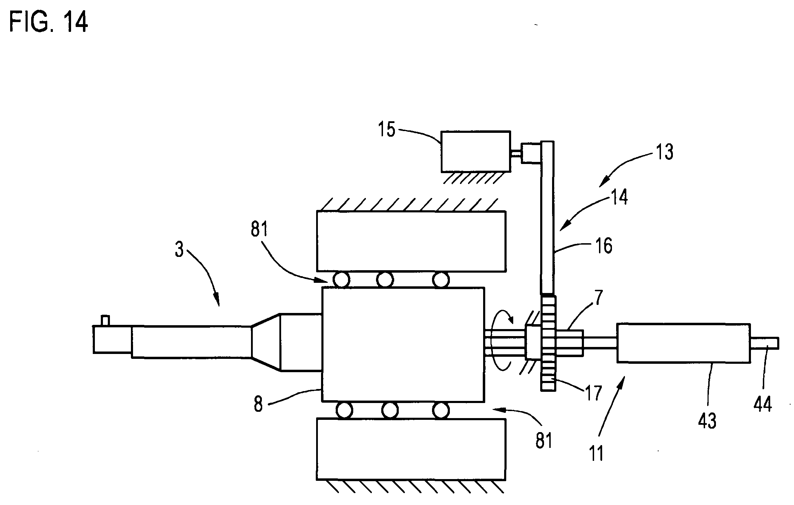

Bei der in Fig. 14 gezeigten Ausführungsform ist für den Linearantrieb nur ein Linearmotor 11 vorgesehen, der hier in axialer Verlängerung zum Gehäuse 8 angeordnet ist. Es handelt sich um einen Linearmotor in zylindrischer Bauweise, mit lagefestem zylindrischem Primärteil 43 und darin sowohl drehbeweglich als auch axial beweglich gelagertem Sekundärteil 44. Das Sekundärteil, auch Läufer genannt, ist mit der Welle 7 verbunden, die hier als Keilwelle ausgeführt ist. An ihr greift das erste Dreh-Antriebsmittel 13 an, hier exemplarisch wiederum als Zugmitteltrieb 14 gezeigt. Dieser ortsfeste Trieb weist einen Motor 15, ein hier z.B. als Riemen ausgebildetes Zugmittel 16 und eine Zugmittelscheibe 17 auf, die z.B. über eine Büchse, in der die Welle 7 zur Linearbewegung axial bewegbar geführt ist, mit der Welle 7 verbunden ist, ähnlich wie bereits bezüglich der Triebverbindung zu Fig. 3 beschrieben. Die Welle 7 ist in geeigneter Weise an entsprechenden Lagerstellen im Gehäuse und gehäuseextern drehgelagert und in entsprechender Weise mit der Spindel des Werkzeugaggregats 3 verbunden, z.B. über die vorstehend beschriebene Kupplung.

Da der Linearmotor nicht seitlich, sondern axial zum Gehäuse 8 angeordnet ist, ist hier folglich das Gehäuse 8 direkt über entsprechende Linearführungsmittel 81 an entsprechenden maschinenseitigen Lagerstellen linear beweglich gelagert. Die Linearbewegung wird über den Linearmotor 11 erwirkt, die Drehbwegung über den Zugmitteltrieb. Beide Bewegungen sind folglich wiederum voneinander entkoppelt. Bei Ansteuerung des Linearmotors 11 wird das Sekundärteil axial in beide Richtungen bewegt, mit ihm die verbundene Welle 7. wird nur die Linearbwegung benötigt, ist das Dreh-Antriebsmittel 13 in Ruhe. Soll gleichzeitig die Drehbewegung überlagert werden, so wird auch das Dreh-Antriebsmittel 13 betätigt und die Welle gedreht. Da das Sekundärteil im zylindrischen Primärteil drehgelagert ist, kann es sich folglich, bei gleichzeitig nach wie vor gegebener axialer Beweglichkeit, drehen. Wird nur der Drehantrieb benötigt, so ruht der Linearmotor 11, dessen Sekundärteil 44 oder Läufer dann nur dreht.

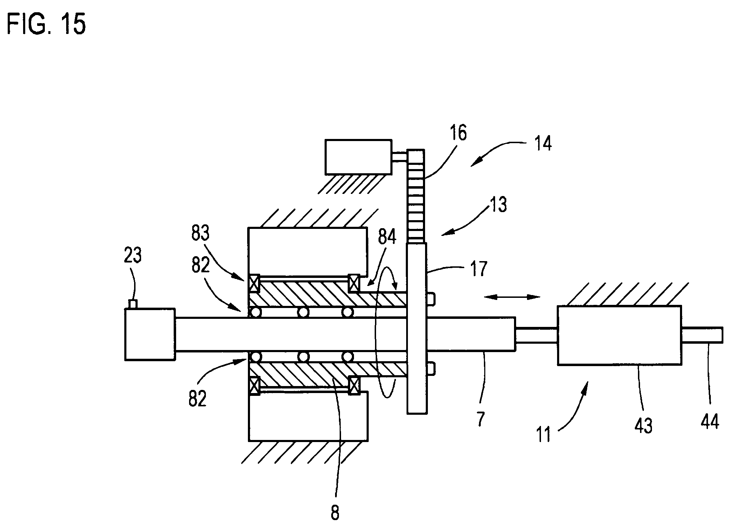

Fig. 15 zeigt in einer Prinzipdarstellung eine Ausführungsform mit umgekehrtem Bewegungsprinzip. Hier wird die Welle 7 linear bewegt und das Gehäuse 8 gedreht. Für die Linearbeweung ist auch hier ein zylindrischer Linearmotor 11 vorgesehen, mit zylindrischem Priämärteil 43 und stangenförmigem, axial und drehbeweglich gelagertem Sekundärteil 44. Das Sekundärteil 44 ist mit der Welle 7 verbunden, so dass diese über das Sekundärteil 44 axial in beide Richtungen bewegt erden kann. Die Welle 7 ist als Keil- oder Polygonwelle aufgeführt und im Gehäuse 8 linear beweglich über Linearführungsmittel 82 gelagert. Eine Drehung der Welle 7 relativ zum Gehäuse 8 ist hier ausgeschlossen.

Das Gehäuse seinerseits ist über zwei Lagermittel 83, 84 an ortsfesten Lagerabschnitten des Maschinengstells o.dgl. drehgelagert. Eine Linearbewegung es Gehäuses 8 hingegen ist ausgeschlossen. Mit dem Gehäuse 8 verbunden ist das Dreh-Antriebsmittel 13, hier exemplarisch wieder als Zugmitteltrieb 14 dargestellt. Die Zugmittelscheibe 17 ist drehfest mit dem Gehäuse 8 verbunden, so dass das Gehäuse 8 bei Betätigung des Motors 15 über das Zugmittel 16 und die Zugmittelscheibe 17 dreht. Infolge der Keil- oder Polygonverbindung zwischen Welle 7 und Gehäuse 8 wird die Welle 7, an der im gezeigten Ausführungsbeispiel eine Aufnahme mit dem Werkzeug 23 direkt befestigt ist, mit gedreht. Parallel dazu kann über den Linearmotor 11 die Welle 7 linear bewegt werden, sie wird hierbei relativ zum ortsfesten, jedoch drehenden Gehäuse 8 verschoben, eine Bewegungsüberlagerung ist gegeben. Alternativ können beide Bewegungen auch einzeln erfolgen, indem entweder nur der Dreh-Antrieb oder nur der Linearantrieb betätigt wird.

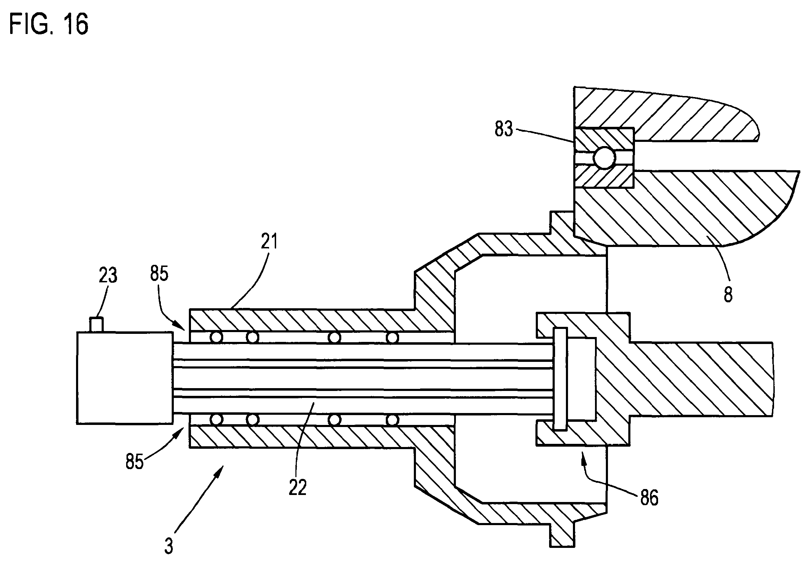

Während in Fig. 15 exemplarisch das bei Verschleiß auswechselbare Werkzeug 23 direkt an der Welle 7 angeordnet ist, ist es bei einem solchen axialen Aufbau hinsichtlich der Anordnung des Linearmotors auch möglich, ein Werkzeugaggregat zu verwenden, wie es bei den zuvor beschriebenen Ausführungsbeispielen verwendet ist. Dies ist in der Prinzipdarstellung gemäß Fig. 16 gezeigt. Das Werkzeugaggregat 3 umfasst ein Werkzeuggehäuse 21, in dem eine Spindel 22, die das Werkzeug 23 trägt, angeordnet ist. Die Spindel 22 ist hier jedoch im Unterschied zu den zuvor beschriebenen Ausführungsformen nur linear beweglich, nicht aber drehbar gelagert. Hierzu sind Linearführungen 85 vorgesehen. Das Werkzeuggehäuse 21 ist über geeignete Verbindungsmittel (z.B. Bajonettverschluss, Kegelflächen etc.), wie sie ausführlich bezüglich Fig. 4 bis 7 beschrieben sind, lösbar und insbesondere automatisch austauschbar mit dem Gehäuse 8 verbunden. Zur lösbaren Kupplung der Spindel 22 mit der Welle 7 ist auch hier eine Kupplung 86 vorgesehen, bei der es sich um eine axiale Kupplung handelt, nachdem über die eine Axialbewegung in beide Richtungen zu übertragen ist.

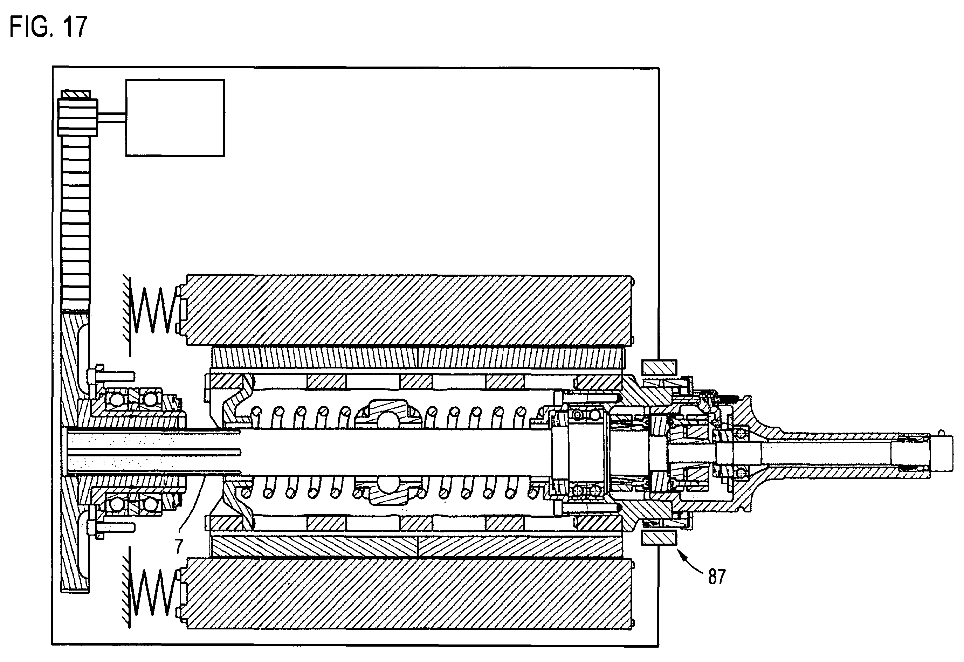

Schließlich zeigt die Prinzipdarstellung nach Fig. 17 am Beispiel eines der Fig. 3 vergleichbaren Ausführungsform eine Möglichkeit, die Linearachse fest zu verklemmen, wenn eine Linearbewegung nicht erforderlich ist, jedoch bei einer drehenden Bauteilbearbeitung Axialkräfte wirken, die ohne separate Verklemmung allein vom Linearantrieb aufzunehmen wären. Hierzu sind entsprechend ansteuerbare Klemmmittel 87 vorgesehen, die im gezeigten Beispiel im Bereich der Verbindung von Gehäuse 8 und Werkzeugaggregat 3 angreifen, jedoch auch an anderer Stelle vorgesehen werden können. Die Klemmmittel umfassen z.B. einen Klemmring oder Klemmbacken oder eine Druckhülse o.dgl., der oder die, abgestützt an einem geeigneten Vorrichtungsbauteil, am Gehäuse 8 und/oder dem Werkzeugaggregat angreifen und diese axial festlegen. Eine Axialbewegung ist hierüber ausgeschlossen, die Axialkräfte werden über die Klemmmittel in das Vorrichtungsgestell o.dgl. eingeleitet. Solche Klemmmittel können bei allen beschriebenen Ausführungsbeispielen verwendet werden, um die Linearachse festzulegen.

## Patentansprüche

1. Wirbelvorrichtung, umfassend ein Werkzeug, das an einer um eine Drehachse rotierend und längs einer Linearachse linear verschiebbar bewegbaren Spindel angeordnet ist, wobei die Spindel (22) in einem Werkzeuggehäuse (21) aufgenommen ist und die Lagerung der rotatorischen Bewegung und die Lagerung der linearen Bewegung voneinander getrennt sind, wobei die Spindel (22) in einem das Werkzeuggehäuse (21) aufweisenden Werkzeugaggregat (3) angeordnet ist, das austauschbar ist, **dadurch gekennzeichnet, dass** die Spindel (22) über eine mittels eines Antriebsmittels antreibbaren Welle (7) bewegbar ist und wobei die Spindel (22) über eine Kupplung (35) mit der Welle (7) manuell oder automatisch lösbar verbindbar ist.

2. Wirbelvorrichtung nach Anspruch 1, **dadurch gekennzeichnet, dass** die über das Antriebsmittel rotierend antreibbare Welle (7) in einem Gehäuse (8) drehgelagert, jedoch axial fest aufgenommen ist, wobei das Gehäuse (8) über Linearführungen (9), gegebenenfalls mittels eines weiteren Antriebsmittels (10), linear bewegbar ist, oder dass die über das Antriebsmittel linear bewegbare Welle in einem Gehäuse linear bewegbar, jedoch drehfest gelagert ist, wobei das Gehäuse, gegebenenfalls mittels eines weiteren Antriebsmittels, drehbar ist.

3. Wirbelvorrichtung nach Anspruch 2, **dadurch gekennzeichnet, dass** bei über das Antriebsmittel gedrehten Welle (7) die Welle (7) mit dem gehäuseexternen, dem Drehantrieb dienenden Antriebsmittel (13) über eine drehfeste, jedoch eine Axialbewegung der Welle (7) bezüglich des lagefesten Antriebsmittels erlaubende Verbindung gekoppelt ist, und insbesondere dass das dem Drehantrieb dienende Antriebsmittel ein Rädergetriebe oder ein Zugmitteltrieb, insbesondere ein Riementrieb (14), umfassend ein Triebrad oder eine Zugmittelscheibe oder -rad, insbesondere eine Riemenscheibe (17), ist, mit dem oder der die Welle (7) drehfest, jedoch axial beweglich gekoppelt ist, wobei ein die Welle lagerndes Lagermittel (19) axial lagefest im Bereich der Verbindung, der Lagerung des Triebrads oder der Zugmittelscheibe oder dem Zugmittelrad (17) dienend, vorgesehen ist.

4. Wirbelvorrichtung nach Anspruch 2, **dadurch gekennzeichnet, dass** bei über das Antriebsmittel linear bewegter Welle (7) das Gehäuse (8) mit dem gehäuseexternen, dem Drehantrieb dienenden weiteren Antriebsmittel drehfest verbunden ist, und die Welle (7) mit dem Gehäuse (8) über eine eine Linearbewegung erlaubende, jedoch drehfeste Verbindung verbunden ist.

5. Wirbelvorrichtung nach Anspruch 1 oder 2, **dadurch gekennzeichnet, dass** das dem Drehantrieb dienende Antriebsmittel (13) ein Elektromotor ist, wobei der Stator axial ortsfest angeordnet und der Rotor mit der Welle oder dem Gehäuse verbunden ist.

6. Wirbelvorrichtung nach einem der vorangehenden Ansprüche, **dadurch gekennzeichnet, dass** das der Linearbewegung dienende Antriebsmittel (10) wenigstens einen Linearmotoren (11) umfasst, wobei das Primärteil (43) ortsfest und das Sekundärteil (44) am Gehäuse (8) oder der Welle (7) angeordnet ist, oder wobei das Sekundärteil ortsfest und das Primärteil am Gehäuse oder der Welle angeordnet ist.

7. Wirbelvorrichtung nach Anspruch 6, **dadurch gekennzeichnet, dass** bei linear bewegtem Gehäuse (8) das Sekundärteil (44) seitlich am Gehäuse (8) angeordnet ist, wobei vorzugsweise zwei, insbesondere einander gegenüberliegend angeordnete, Linearmotoren (11) vorgesehen sind, oder dass bei linear bewegter Welle (7) der Linearmotor (11) in axialer Verlängerung der Welle (7) angeordnet und das Sekundärteil (44) mit der Welle (7) verbunden ist.

8. Wirbelvorrichtung nach Anspruch 6 oder 7, **dadurch gekennzeichnet, dass** die Primärteile (43) gegen Federelemente (20), und gegebenenfalls gegen einen Dämpfer (72), verschieblich gelagert sind.

9. Wirbelvorrichtung nach einem der vorangehenden Ansprüche, **dadurch gekennzeichnet, dass** das linear bewegbare Gehäuse (8) oder die linear bewegbare Welle (7) in beiden Axialrichtungen gegen einen Federresonator (45) bewegbar ist, wobei vorzugsweise der Federresonator (45) zwei gegeneinander verspannte Federn (46, 47) aufweist, die mit einem Ende gehäuse- oder wellenseitig und mit dem anderen Ende gegen einen axial ortsfesten Anschlag (50) gelagert sind, wobei weiter vorzugsweise der Federresonator (45) einen Dämpfer umfasst.

10. Wirbelvorrichtung nach einem der vorangehenden Ansprüche, **dadurch gekennzeichnet, dass** die Spindel (22) in dem in der Montagestellung drehfest angeordneten Werkzeuggehäuse (21) über wenigstens zwei, vorzugsweise gegeneinander verspannte Radiallager (24, 25), insbesondere Schrägkugellager, gelagert ist, wobei vorzugsweise dem im Bereich des Werkzeugs (23) angeordneten Radiallager ein weiteres Radiallager, insbesondere ein Nadellager zugeordnet ist.

11. Wirbelvorrichtung nach einem der vorangehenden Ansprüche, **dadurch gekennzeichnet, dass** das Werkzeuggehäuse (21) einen ersten Verbindungsabschnitt (28) und das Gehäuse (8) einen zweiten Verbindungsabschnitt (30) aufweist, die in der Montagestellung eine Formschlussverbindung eingehen, wobei vorzugsweise die beiden Abschnitte als Kegelabschnitte (27, 29) mit Plananlage ausgeführt sind.

12. Wirbelvorrichtung nach einem der vorangehenden Ansprüche, **dadurch gekennzeichnet, dass** die Kupplung (35) eine axiale Steckkupplung, insbesondere eine Klauen- oder Vielzahnkupplung ist, wobei vorzugsweise das Werkzeuggehäuse (21) und die Spindel (22) nur in einer definierten Stellung am Gehäuse (8) ankuppelbar sind.

13. Wirbelvorrichtung nach Anspruch 12, **dadurch gekennzeichnet, dass** zur Fixierung der Spindel (22) im nicht gekuppelten Zustand eine Arretiereinrichtung (38) vorgesehen ist, wobei vorzugsweise die Arretiervorrichtung (38) einen gegen ein Federelement (40) bewegbaren Arretierstift (41) aufweist, der zum Fixieren über das Federelement (40) in eine Arretieraufnahme (42) an der Spindel (22) oder der Kupplung (35) eingeführt wird, und der beim Bewegen in die Montagestellung automatisch aus der Arretierstellung bewegt wird.

14. Wirbelvorrichtung nach einem der vorangehenden Ansprüche, **dadurch gekennzeichnet, dass** ein Mittel zum direkten oder indirekten Klemmen (87) des linear bewegbaren Gehäuses (8) oder der linear bewegbaren Welle (7), um dieses oder diese zeitweise axial zu fixieren, vorgesehen ist, oder dass Mittel zum direkten oder indirekten Klemmen des rotativ bewegbaren Gehäuses oder der rotativ bewegbaren Welle, um dieses oder diese zeitweise drehfest zu fixieren, vorgesehen sind.

15. Wirbelvorrichtung nach einem der vorangehenden Ansprüche, **dadurch gekennzeichnet, dass** am Werkzeuggehäuse (21) und am Gehäuse (8) Verbindungsmittel zum lösbaren Befestigen des Werkzeuggehäuses (21) am Gehäuse (8) vorgesehen sind, wobei vorzugsweise die Verbindungsmittel als Bajonettverriegelung ausgeführt sind.

16. Wirbelvorrichtung nach Anspruch 15, **dadurch gekennzeichnet, dass** am Gehäuse ein drehbarer Bajonettring (32) mit mehreren radial nach innen gerichteten Vorsprüngen (33) und am Werkzeuggehäuse (21) ein Verriegelungsabschnitt mit mehreren radial nach außen gerichteten Vorsprüngen (34) vorgesehen sind, wobei zur axialen Bewegung des Werkzeuggehäuses (21) relativ zum Gehäuse (8) entweder die beim Verdrehen des Bajonettrings (32) aufeinander auflaufenden Flächen der einander hintergreifenden Vorsprünge zumindest teilweise schräg verlaufen, oder wobei der Bajonettring (32) über ein Gewinde axial bewegbar am Gehäuse (8) angeordnet ist, wobei vorzugsweise am Bajonettring (32) ein Formelement (52) vorgesehen ist, an dem bei einem Werkzeugwechsel ein Betätigungselement einer automatischen Werkzeugwechselvorrichtung zum Bewegen des Bajonettrings (32) angreift.

17. Werkzeugmaschine, umfassend eine Wirbelvorrichtung nach einem der vorangehenden Ansprüche.

## Claims

1. Whirling unit, comprising a tool which is arranged on a spindle that rotates about an axis of rotation and can be moved linearly displaceably along a linear axis, the spindle (22) being held in a tool housing (21) and the mounting of the rotational movement and the mounting of the linear movement being separated from each other, the spindle (22) being arranged in a tool assembly (3) which is replaceable and has the tool housing (21), **characterized in that** the spindle (22) can be moved via a shaft (7) that can be driven by a drive means, and wherein the spindle (22) can be connected detachably to the shaft (7) manually or automatically via a coupling (35).

2. Whirling unit according to Claim 1, **characterized in that** the shaft (7) that can be driven in rotation via the drive means is rotatably mounted in a housing (8) but is held in an axially fixed manner, wherein the housing (8) can be moved linearly by linear guides (9), if appropriate by means of a further drive means (10), or **in that** the shaft that can be moved linearly by the drive means can be moved linearly in a housing via the drive means but is mounted so as to be fixed against rotation, wherein the housing can be rotated, if appropriate by means of a further drive means.

3. Whirling unit according to Claim 2, **characterized in that** in the case of the shaft (7) that can be rotated via the drive means, the shaft (7) is coupled to the drive means (13) that are external to the housing and are used for the rotational drive by a connection that is rotationally fixed but permits an axial movement of the shaft (7) with respect to the fixed-position drive means, and in particular **in that** the drive means used for the rotational drive is a gear train or a flexible drive means, in particular a belt drive (14), comprising a pinion or a flexible drive pulley or wheel, in particular a belt pulley (17), to which the shaft (7) is coupled so as to be fixed against rotation but axially movable, wherein a bearing means (19) supporting the shaft is provided in a fixed axial position in the area of the connection used to mount the pinion or the flexible drive pulley or the flexible drive wheel (17).

4. Whirling unit according to Claim 2, **characterized in that** in the case of the shaft (7) that can be moved linearly by the drive means, the housing (8) is connected to the further drive means that are external to the housing and are used for the rotational drive so as to be fixed against rotation, and the shaft (7) is connected to the housing (8) via a connection which permits a linear movement but is fixed against rotation.

5. Whirling unit according to Claim 1 or 2, **characterized in that** the drive means (13) used for the rotational drive is an electric motor, wherein the stator is arranged in a fixed axial location and the rotor is connected to the shaft or the housing.

6. Whirling unit according to one of the preceding claims, **characterized in that** the drive means (10) used for the linear movement comprises at least one linear motor (11), wherein the primary part (43) is arranged in a fixed location and the secondary part (44) is arranged on the housing (8) or the shaft (7), or wherein the secondary part is arranged in a fixed location and the primary part is arranged on the housing or the shaft.

7. Whirling unit according to Claim 6, **characterized in that** in the case of the linearly moved housing (8), the secondary part (44) is arranged laterally on the housing (8), wherein preferably two linear motors (11), in particular arranged opposite each other, are provided, or **in that** in the case of the linearly moved shaft (7), the linear motor (11) is arranged in the axial extension of the shaft (7) and the secondary part (44) is connected to the shaft (7).

8. Whirling unit according to Claim 6 or 7, **characterized in that** the primary parts (43) are mounted such that they can displaced counter to spring elements (20) and, if appropriate, counter to a damper (72).

9. Whirling unit according to one of the preceding claims, **characterized in that** the linearly movable housing (8) or the linearly movable shaft (7) can be moved in both axial directions counter to a spring resonator (45), wherein the spring resonator (45) preferably has two springs (46, 47) braced against each other, which are mounted with one end on the side of the housing or shaft and with the other end against an axially fixed-location stop (50), wherein the spring resonator (45) further preferably comprises a damper.

10. Whirling unit according to one of the preceding claims, **characterized in that** the spindle (22) is mounted in the tool housing (21), which is arranged to be fixed against rotation in the mounted position, via at least two radial bearings (24, 25), preferably braced against each other, in particular angular contact ball bearings, wherein the radial bearing arranged in the area of the tool (23) is preferably assigned a further radial bearing, in particular a needle roller bearing.

11. Whirling unit according to one of the preceding claims, **characterized in that** the tool housing (21) has a first connecting section (28) and the housing (8) has a second connecting section (30) which, in the mounted position, enter into a form-fitting connection, wherein the two sections are preferably implemented as conical sections (27, 29) with planar contact.

12. Whirling unit according to one of the preceding claims, **characterized in that** the coupling (35) is an axial plug coupling, in particular a claw or four-tooth coupling, wherein the tool housing (21) and the spindle (22) can be coupled to the housing (8) preferably only in a defined position.

13. Whirling unit according to Claim 12, **characterized in that** in order to fix the spindle (22) in the uncoupled state, a locking device (38) is provided, the locking device (38) preferably having a locking pin (41) which can be moved counter to a spring element (40) and which, to be fixed, is guided by the spring element (40) into a locking receptacle (42) on the spindle (22) or the coupling (35), and which, during the movement into the mounted position, is moved automatically out of the locking position.

14. Whirling unit according to one of the preceding claims, **characterized in that** a means is provided for the direct or indirect clamping (87) of the linearly movable housing (8) or the linearly movable shaft (7), in order to fix one of the latter axially temporarily, or **in that** means are provided for the direct or indirect clamping of the rotationally movable housing or the rotationally movable shaft, in order to fix one of the latter temporarily so as to be fixed against rotation.

15. Whirling unit according to one of the preceding claims, **characterized in that** connecting means for the detachable fixing of the tool housing (21) on the housing (8) are provided on the tool housing (21) and on the housing (8), the connecting means preferably being implemented as a bayonet locking system.

16. Whirling unit according to Claim 15, **characterized in that** a rotatable bayonet ring (32) having a plurality of projections (33) directed radially inwards is provided on the housing, and a locking section having a plurality of projections (34) directed radially outwards is provided on the tool housing (21), wherein, for the purpose of the axial movement of the tool housing (21) relative to the housing (8), either the faces of the protrusions that engage behind one another and run onto one another during the rotation of the bayonet ring (32) extend at least partially obliquely, or wherein the bayonet ring (32) is arranged via a thread such that it can be moved axially on the housing (8), wherein a shape element (52) is preferably provided on the bayonet ring (32), on which, during a tool change, an actuating element of an automatic tool change device acts in order to move the bayonet ring (32).

17. Machine tool comprising a whirling unit according to one of the preceding claims.

## Revendications

1. Dispositif à tourbillonner, comprenant un outil qui est disposé au niveau d'une broche déplaçable en rotation autour d'un axe de rotation et de manière à pouvoir coulisser linéairement le long d'un axe linéaire, la broche (22) étant reçue dans un boîtier d'outil (21) et le support sur palier du mouvement de rotation et le support sur palier du mouvement linéaire étant séparés l'un de l'autre, la broche (22) étant disposée dans un groupe d'outils (3) présentant le boîtier d'outil (21), lequel groupe d'outils est remplaçable, **caractérisé en ce que** la broche (22) peut être déplacée par le biais d'un arbre (7) pouvant être entraîné par le biais d'un moyen d'entraînement, et la broche (22) pouvant être connectée à l'arbre (7) de manière amovible manuellement ou automatiquement par le biais d'un accouplement (35).

2. Dispositif à tourbillonner selon la revendication 1, **caractérisé en ce que** l'arbre (7) pouvant être entraîné par le biais du moyen d'entraînement est supporté à rotation dans un boîtier (8) mais est reçu fixement axialement, le boîtier (8) étant déplaçable linéairement par le biais de guides linéaires (9), éventuellement par le biais d'un moyen d'entraînement supplémentaire (10), ou **en ce que** l'arbre pouvant être déplacé linéairement par le biais du moyen d'entraînement est supporté de manière déplaçable linéairement dans un boîtier mais de manière solidaire en rotation, le boîtier pouvant être entraîné en rotation éventuellement par le biais d'un moyen d'entraînement supplémentaire.

3. Dispositif à tourbillonner selon la revendication 2, **caractérisé en ce que** dans le cas où l'arbre (7) est entraîné en rotation par le biais du moyen d'entraînement, l'arbre (7) est accouplé au moyen d'entraînement (13) extérieur au boîtier, servant à l'entraînement en rotation, par le biais d'une connexion solidaire en rotation mais permettant un déplacement axial de l'arbre (7) par rapport au moyen d'entraînement fixé en position, et notamment **en ce que** le moyen d'entraînement servant à l'entraînement en rotation est une transmission à roues ou une transmission à moyen de traction, en particulier une transmission à courroie (14), comprenant une roue d'entraînement ou une poulie ou une roue à moyen de traction, en particulier une poulie à courroie (17), avec laquelle l'arbre (7) est accouplé de manière solidaire en rotation mais déplaçable axialement, un moyen de palier (19) supportant l'arbre étant prévu de manière fixée en position axialement dans la région de la connexion, en servant au support sur palier de la roue d'entraînement ou de la poulie à moyen de traction ou de la roue à moyen de traction (17).

4. Dispositif à tourbillonner selon la revendication 2, **caractérisé en ce que** dans le cas où l'arbre (7) est entraîné linéairement par le biais du moyen d'entraînement, le boîtier (8) est connecté de manière solidaire en rotation au moyen d'entraînement supplémentaire externe au boîtier, servant à l'entraînement en rotation, et l'arbre (7) est connecté au boîtier (8) par le biais d'une connexion permettant un mouvement linéaire mais solidaire en rotation.

5. Dispositif à tourbillonner selon la revendication 1 ou 2, **caractérisé en ce que** le moyen d'entraînement (13) servant à l'entraînement en rotation est un moteur électrique, le stator étant disposé de manière fixe axialement et le rotor étant connecté à l'arbre ou au boîtier.

6. Dispositif à tourbillonner selon l'une quelconque des revendications précédentes, **caractérisé en ce que** le moyen d'entraînement (10) servant au mouvement linéaire comprend au moins un moteur linéaire (11), la partie primaire (43) étant disposée fixement et la partie secondaire (44) étant disposée sur le boîtier (8) ou sur l'arbre (7), ou la partie secondaire étant disposée fixement et la partie primaire étant disposée sur le boîtier ou sur l'arbre.

7. Dispositif à tourbillonner selon la revendication 6, **caractérisé en ce que** dans le cas où le boîtier (8) est déplacé linéairement, la partie secondaire (44) est disposée latéralement au niveau du boîtier (8), deux moteurs linéaires (11), notamment opposés l'un à l'autre, étant de préférence prévus, ou **en ce que** dans le cas où l'arbre (7) est déplacé linéairement, le moteur linéaire (11) est disposé dans le prolongement axial de l'arbre (7) et la partie secondaire (44) est connectée à l'arbre (7).

8. Dispositif à tourbillonner selon la revendication 6 ou 7, **caractérisé en ce que** les parties primaires (43) sont supportées de manière déplaçable contre des éléments de ressort (20), et éventuellement contre un amortisseur (72).

9. Dispositif à tourbillonner selon l'une quelconque des revendications précédentes, **caractérisé en ce que** le boîtier déplaçable linéairement (8) ou l'arbre déplaçable linéairement (7) peut être déplacé dans les deux directions axiales contre un résonateur à ressort (45), le résonateur à ressort (45) présentant de préférence deux ressorts précontraints l'un contre l'autre (46, 47), qui sont supportés par une extrémité du côté du boîtier ou du côté de l'arbre et par l'autre extrémité contre une butée fixe axialement (50), le résonateur à ressort (45) comprenant en outre de préférence un amortisseur.

10. Dispositif à tourbillonner selon l'une quelconque des revendications précédentes, **caractérisé en ce que** la broche (22) est supportée dans le boîtier d'outil (21), disposé de manière solidaire en rotation dans la position de montage, par le biais d'au moins deux paliers radiaux (24, 25) de préférence précontraints l'un contre l'autre, en particulier des roulements à billes à contact oblique, un palier radial supplémentaire, en particulier un palier à aiguilles, étant de préférence associé au palier radial disposé dans la région de l'outil (23).

11. Dispositif à tourbillonner selon l'une quelconque des revendications précédentes, **caractérisé en ce que** le boîtier d'outil (21) présente une première portion de connexion (28) et le boîtier (8) présente une deuxième portion de connexion (30), qui, dans la position de montage, entrent en liaison d'engagement par correspondance de formes, les deux portions étant de préférence réalisées sous forme de portions coniques (27, 29) avec appui plan.

12. Dispositif à tourbillonner selon l'une quelconque des revendications précédentes, **caractérisé en ce que** l'accouplement (35) est un accouplement par enfichage axial, en particulier un accouplement à griffes ou à plusieurs dents, le boîtier d'outil (21) et la broche (22) ne pouvant de préférence être accouplés au boîtier (8) que dans une position définie.

13. Dispositif à tourbillonner selon la revendication 12, **caractérisé en ce que** pour la fixation de la broche (22) dans l'état non accouplé, un dispositif de blocage (38) est prévu, le dispositif de blocage (38) présentant de préférence une goupille de blocage (41) déplaçable contre un élément de ressort (40), laquelle, pour la fixation, est introduite par le biais de l'élément de ressort (40) dans un logement de blocage (42) sur la broche (22) ou sur l'accouplement (35), et est déplacée automatiquement hors de la position de blocage lors du déplacement dans la position de montage.

14. Dispositif à tourbillonner selon l'une quelconque des revendications précédentes, **caractérisé en ce qu'**un moyen pour le serrage direct ou indirect (87) du boîtier (8) déplaçable linéairement ou de l'arbre (7) déplaçable linéairement est prévu afin de fixer celui-ci temporairement axialement ou **en ce que** des moyens pour le serrage direct ou indirect du boîtier déplaçable en rotation ou de l'arbre déplaçable en rotation sont prévus afin de fixer celui-ci temporairement de manière solidaire en rotation.

15. Dispositif à tourbillonner selon l'une quelconque des revendications précédentes, **caractérisé en ce que** des moyens de connexion pour la fixation amovible du boîtier d'outil (21) au boîtier (8) sont prévus au niveau du boîtier d'outil (21) et au niveau du boîtier (8), les moyens de connexion étant de préférence réalisés sous forme de verrouillage à baïonnette.

16. Dispositif à tourbillonner selon la revendication 15, **caractérisé en ce qu'**une bague de baïonnette rotative (32) comprenant plusieurs saillies (33) orientées radialement vers l'intérieur est prévue sur le boîtier et une portion de verrouillage comprenant plusieurs saillies (34) orientées radialement vers l'extérieur est prévue sur le boîtier d'outil (21), où, pour le déplacement axial du boîtier d'outil (21) par rapport au boîtier (8), soit les surfaces, montant l'une sur l'autre lors de la rotation de la bague de baïonnette (32), des saillies s'engageant par l'arrière les unes avec les autres, s'étendent au moins partiellement obliquement, soit la bague de baïonnette (32) est disposée de manière déplaçable axialement sur le boîtier (8) par le biais d'un filetage, un élément façonné (52) étant prévu de préférence sur la bague de baïonnette (32), au niveau duquel, lors d'un changement d'outil, s'engage un élément d'actionnement d'un dispositif de changement d'outil automatique en vue de déplacer la bague de baïonnette (32).

17. Machine-outil comprenant un dispositif à tourbillonner selon l'une quelconque des revendications précédentes.
